# EUROPEAN PATENT APPLICATION

(11) **EP 4 845 280 A1**
(43) Date of publication of application: **25.11.2026**
(21) Application number: 24917662.9
(22) Date of filing: 16.01.2024
(51) Int. Cl.: H04W 72/51

(54) **DATA INFORMATION TRANSMISSION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: TANG, Hai, Dongguan, Guangdong 523860 (CN)
(74) Representative: Taor, Simon Edward William
(86) International application number: PCT/CN2024/072574
(87) International publication number: WO 2025/152035

(57) **Abstract**

The present application relates to the field of communications, and discloses a data information transmission method and apparatus, a device, and a storage medium. The method comprises: using at least one resource block in at least one resource pool to transmit data information. The method provided by the present application can support a terminal device, which collects ambient energy for working, to transmit data information.

## Description

### TECHNICAL FIELD

The present disclosure relates to the field of communication, and in particular to a method and an apparatus for transmitting data information, a device and a storage medium.

### BACKGROUND

A terminal device that obtains energy for communication through ambient energy harvesting may be referred to as an Ambient Internet of Things (Ambient IoT) device or may be referred to as a terminal device that operates by harvesting ambient energy, and the ambient energy may be radio frequency (RF), solar energy, thermal energy, mechanical energy, and the like.

### SUMMARY

The embodiments of the present disclosure provide a method and an apparatus for transmitting data information, a device and a storage medium. The technical solutions are as follows.

In one aspect of the present disclosure, there is provided a method for transmitting data information. The method is performed by a terminal device, and the terminal device is a device that operates by harvesting ambient energy. The method includes the following operation.

Transmission of the data information is performed by using at least one resource block in at least one resource pool.

In one aspect of the present disclosure, there is provided a method for transmitting data information. The method is performed by a network device. The method includes the following operation.

Data information is detected. The data information is transmitted by a terminal device by using at least one resource block in at least one resource pool, and the terminal device is a device that operates by harvesting ambient energy.

In one aspect of the present disclosure, there is provided an apparatus for transmitting data information. The apparatus is an apparatus that operates by harvesting ambient energy. The apparatus includes a transmission module.

The transmission module is configured to perform transmission of data information by using at least one resource block in at least one resource pool.

In one aspect of the present disclosure, there is provided an apparatus for transmitting data information. The apparatus includes a detection module.

The detection module is configured to detect data information. The data information is transmitted by a terminal device by using at least one resource block in at least one resource pool, and the terminal device is a device that operates by harvesting ambient energy.

In one aspect of the present disclosure, there is provided a terminal device operating by harvesting ambient energy. The terminal device includes a processor and a memory. At least one program is in the memory. The terminal device is configured to perform the at least one program in the memory to implement the above method for transmitting data information.

In one aspect of the present disclosure, there is provided a network device. The network device includes a processor and a memory. At least one program is in the memory. The network device is configured to perform the at least one program in the memory to implement the above method for transmitting data information.

In one aspect of the present disclosure, there is provided a computer-readable storage medium in which a computer program is stored. The computer program is configured to be executed by a processor to implement the method for transmitting the data information.

In one aspect of the present disclosure, there is provided a chip. The chip includes a programmable logic circuit and/or program instructions. When the chip is running, the above method for transmitting data information is implemented.

In one aspect of the present disclosure, there is provided a computer program product or a computer program. The computer program product or a computer program includes computer instructions. The computer instructions is stored in a computer-readable storage medium, and a processor reads and executes the computer instructions from the computer-readable storage medium to implement the above method for transmitting data information.

The technical solutions provided by the embodiments of the present disclosure at least include the following beneficial effects.

The method causes the terminal device to perform transmission of data information by using the resource block in the pre-configured resource pool, so that not only the data transmission requirement of the terminal device is satisfied, but also the transmission can be performed without need of receiving the control signaling that is dynamically scheduled or only receiving the control signaling of few bits compared with the traditional flow of the terminal device requesting to obtain the resource and then performing data transmission, thus saving the energy consumption of the terminal device and being beneficial for adapting different types of terminal devices that operate by harvesting ambient energy.

### BRIEF DESCRIPTION OF THE DRAWINGS

In order to more clearly explain the technical solutions in the embodiments of the present disclosure, the following will briefly introduce the accompanying drawings that need to be used in the description of the embodiments. It is apparent that the accompanying drawings in the following description are only some embodiments of the present disclosure, and for those with ordinary skill in the art, other drawings may be obtained from these drawings without exerting creative efforts.
FIG. 1 illustrates a schematic diagram of a communication system provided by the related art.
FIG. 2 illustrates a schematic diagram of radio frequency energy harvesting provided by the related art.
FIG. 3 illustrates a schematic diagram of a back scattering communication process provided by the related art.
FIG. 4 illustrates a schematic diagram of a resistive load modulation provided by the related art.
FIG. 5 illustrates a schematic diagram of encoding manners provided by the related art.
FIG. 6 illustrates a schematic diagram of a communication system provided by an exemplary embodiment of the present disclosure.
FIG. 7 illustrates a flowchart of a method for transmitting data information according to an exemplary embodiment of the present disclosure.
FIG. 8 illustrates a schematic diagram of a method for transmitting data information according to an exemplary embodiment of the present disclosure.
FIG. 9 illustrates a schematic diagram of a method for transmitting data information according to an exemplary embodiment of the present disclosure.
FIG. 10 illustrates a flowchart of a method for transmitting data information according to an exemplary embodiment of the present disclosure.
FIG. 11 illustrates a block diagram of a structure of an apparatus for transmitting data information according to an exemplary embodiment of the present disclosure.
FIG. 12 illustrates a block diagram of a structure of an apparatus for transmitting data information according to an exemplary embodiment of the present disclosure.
FIG. 13 illustrates a schematic structural diagram of a wireless communication device according to an exemplary embodiment of the present disclosure.

### DETAILED DESCRIPTION

In order to make the object, technical solutions, and advantages of the present disclosure more clear, embodiments of the present disclosure will be described in further detail below with reference to the accompanying drawings. Exemplary embodiments will be described in detail herein, examples of which are shown in the accompanying drawings. When the following description refers to the drawings, unless otherwise indicated, the same numerals in different drawings represent the same or similar elements. The embodiments described in the following exemplary examples do not represent all embodiments consistent with the present disclosure. Rather, they are merely examples of apparatuses and methods consistent with some aspects of the present disclosure as detailed in the appended claims.

The terminology used herein is for the purpose of describing particular embodiments only and is not intended to limit the application. As used in the present disclosure and the appended claims, the singular forms of "an", "the" and "said" are also intended to include the plurality forms unless the context clearly indicates otherwise. It should also be understood that the term "and/or" as used herein refers to and encompasses any or all possible combinations of one or more associated listed items.

It is to be understood that although the terms first, second, third, and the like may be used in the present disclosure to describe various information, such information should not be limited to such terms. These terms are used only to distinguish information of the same type from each other. For example, the first information may also be referred to as the second information without departing from the scope of the present disclosure, and similarly, the second information may also be referred to as the first information. Depending on the context, the word "if" as used herein may be interpreted as "at..." or "when..." or "in response to determination...". In the present specification, when the meaning expressed by a Boolean Value is expressed, '0' represents a 'first meaning' and '1' represents a 'second meaning', and it can be understood by those skilled in the art that the representative meanings thereof can be interchanged without loss of generality, that is, '1' represents a 'first meaning' and '0' represents a 'second meaning'.

The technical solutions described in some embodiments of the present disclosure may be applicable to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolution of the NR system, a LTE-based access to unlicensed spectrum (LTE-U) system, a NR-based access to unlicensed spectrum (NR-U) system, a Non-Terrestrial Networks (NTN) system, an Universal Mobile Telecommunication System (UMTS), Wireless Local Area Networks (WLAN), Wireless Fidelity (WiFi), the 5th-Generation (5G) system, cellular Internet of Things system, cellular passive Internet of Things system, the subsequent evolution system of 5G NR system, or a 6G and subsequent evolution systems.

It should be understood that in some embodiments of the present disclosure, "5G" may also be referred to as "5G NR" or "NR".

It should be understood that in the description of the embodiments of the present disclosure, the term "correspondence" may represent that there is a direct correspondence or an indirect correspondence between the two objects, or may represent that there is an association relationship between the two objects, or may be used for representing a relationship between indicating and being indicated, configuring and being configured, etc.

In the embodiments of the present disclosure, "predefinition" may be realized by pre-storing corresponding codes, tables, or other ways that may be used to indicate relevant information in a device (for example, including a terminal device and a network device), and the specific implementation method thereof is not limited in the present disclosure. For example, "predefinition" may refer to be defined in a protocol.

In the embodiments of the present disclosure, "protocol" may refer to a standard protocol in the communication field, and may include, for example, an LTE protocol, an NR protocol, an Internet of Things protocol, and related protocols applied to future communication systems, which is not limited in the present disclosure.

The technical solutions provided in the embodiments of the present disclosure may also be applied to Machine Type Communication (MTC), Long Term Evolution-Machine (LTE-M), Device-to-Device (D2D) network, Machine to Machine (M2M) network, Internet of Things (IoT) network, or other networks. The IoT network may include, for example, an Internet of Vehicles. Here, the communication methods in the Internet of Vehicles system are collectively referred to as Vehicle to X (V2X, X may represent anything), and for example, the V2X may include Vehicle to Vehicle (V2V) communication, Vehicle to Infrastructure (V2I) communication, Vehicle to Pedestrian (V2P) communication, Vehicle to Network (V2N) communication, and the like.

The wireless communication system provided in the embodiments of the present disclosure may be applied to, but is not limited to, at least one of the following communication scenarios: an uplink communication scenario, a downlink communication scenario, or a sidelink communication scenario.

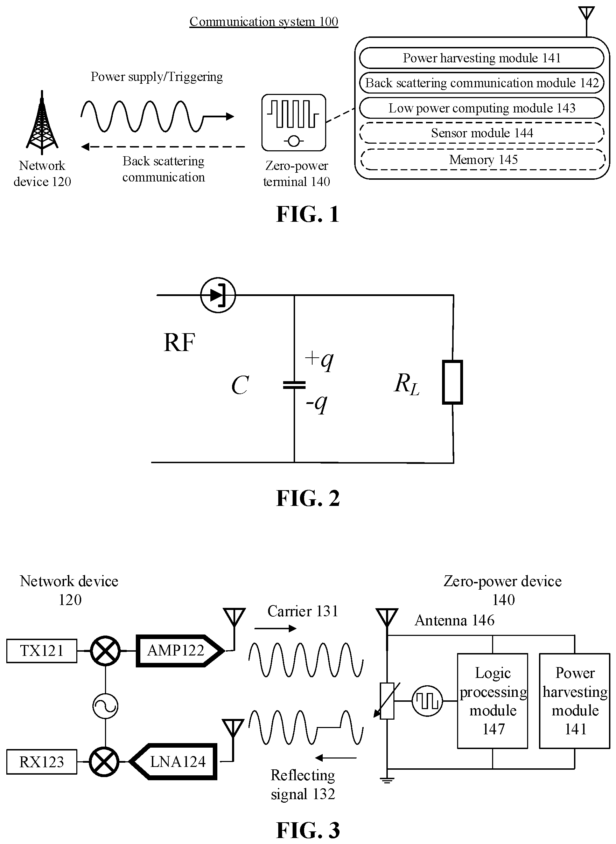

FIG. 1 illustrates a schematic diagram of a communication system 100 including a network device 120 and a zero-power device 140 provided by the related art.

The network device 120 is configured to send a wireless power supply signal to the zero-power device 140, and a downlink communication signal, and receive a back scattering signal from the zero-power device 140. The zero-power device 140, also referred to as an Ambient IoT device or an AMP device, includes a power harvesting module 141, a back scattering communication module 142, and a low power computing module 143. The power harvesting module 141 may harvest power carried by radio waves (wireless signals) in space for driving the low-power computing module 143 of the zero-power device 140 and realizing back scattering communication. After the zero-power device 140 obtains power, the zero-power device 140 may receive control signaling from the network device 120, and send data to the network device 120 in a backscatter-based manner according to the control signaling. The data that is sent may come from data stored by the zero-power device 140 itself (for example, an identity identifier or pre-written information, such as a manufacturing date, brand, manufacturer, etc. of the product).

The zero-power device 140 may also include a sensor module 144 and a memory 145. The sensor module 144 may include various types of sensors, and the zero-power device 140 may report data collected by the various types of sensors based on the zero-power mechanism. The memory 145 is used to store some basic information (such as an article identification, etc.) or to acquire sensing data such as ambient temperature and ambient humidity.

The zero-power device 140 itself does not need a battery. In addition, the low-power computing module 143 is used to realize simple signal demodulation, decoding, encoding, modulation and other simple computing work. Therefore, the zero-power module only needs a minimalist hardware design, so that the zero-power device 140 is very low in cost and small in size.

The network device 120 includes, but is not limited to, a cellular network device, such as a 5G/6G network device, a base station device, a WiFi/WLAN network device such as an Access Point (AP), a router, a mobile Access Point, and the like. The for example, a mobile phone,

The zero-power device 140 includes, but is not limited to, a handheld device, a wearable device, an in-vehicle device, an Internet of Things device, and the like, and the zero-power device 140 may be at least one of a mobile phone, a tablet, an e-book reader, a laptop computer, a desktop computer, a television, a game console, an Augmented Reality (AR) terminal, a Virtual Reality (VR) terminal, and a Mixed Reality (MR) terminal, a wearable device, a handle, an electronic tag, a controller, and the like.

It should be noted that the zero-power device may also be referred to as at least one of: an ultra-low Power device, a low Power device, a Passive IoT device, an Ambient energy Enabled Internet of Things (Ambient IoT/A-IoT) device, a device that operates by harvesting the ambient energy, and the embodiments of the present disclosure only takes the zero-power device as an example for illustration, but is not limited thereto. Alternatively, the terminal device in the embodiments of the present disclosure may be realized by the above-described zero-power device, or may be realized by a device other than the above-described zero-power device.

The communication technology implemented by the zero-power device may be referred to as zero-power communication technology, or ultra-low-power communication technology, or low-power communication technology, or Ambient IoT/A-IoT technology, or passive Internet of Things technology, or zero-power Internet of Things technology.

Next, the key technologies of zero-power communication are introduced.

### • Radio Frequency Power Harvesting

FIG. 2 illustrates a schematic diagram of Radio frequency power harvesting provided by the related art. For radio frequency power harvesting, based on the principle of electromagnetic induction, an RF module is used to implement the harvesting of energy from ambient electromagnetic waves, and obtain the power required to drive zero-power devices (such as driving low-power demodulation modules, modulation modules, sensors, and memory readout) through electromagnetic induction and the connection with a capacitor CC and a load resistor RL that are connected in parallel. Therefore, the zero power devices do not require traditional batteries.

### • Back Scattering;

FIG. 3 illustrates a schematic diagram of a back scattering communication process provided by the related art. The zero-power device 140 receives the wireless signal carrier 131 sent by the transmission module (Transmit, TX) 121 of the network device 120 by using the AMPlifier (AMP) 122, modulates the wireless signal carrier 131, loads information to be sent by using the logic processing module 147, and harvests radio frequency power by using the power harvesting module 141. The zero-power device 140 uses the antenna 146 to radiate the modulated reflected signal 132. The process of information transmission is referred to as back scattering communication. A Receive module (Receive, RX) 123 of the network device 120 receives the modulated reflected signal 132 by using a Low Noise Amplifier (LNA) 124. Back scattering and load modulation functions are inseparable. The load modulation completes the modulation process by adjusting and controlling the circuit parameters of the oscillation loop of the zero-power device 140 according to the beat of the data stream to cause parameters such as the magnitude of the electronic tag impedance to be changed accordingly.

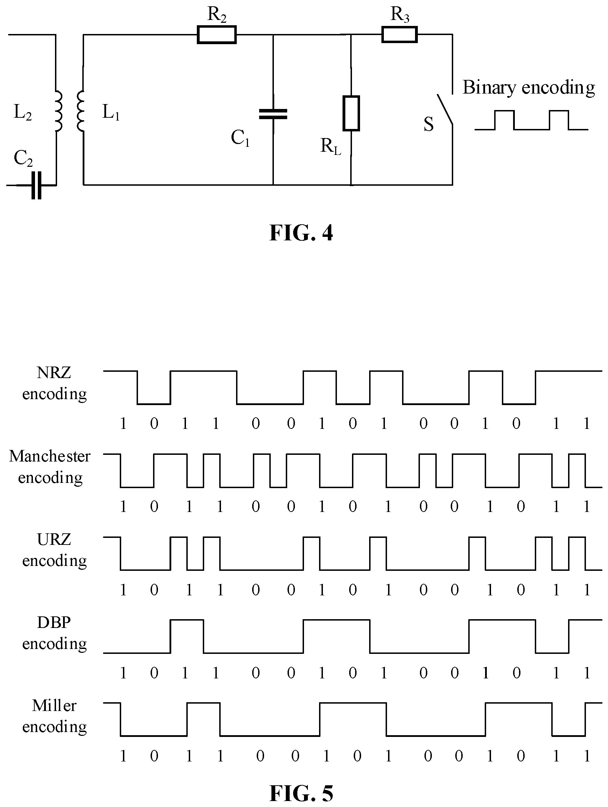

Load modulation technology mainly includes resistance load modulation and capacitance load modulation. FIG. 4 illustrates a schematic diagram of resistive load modulation provided by the related art. In the resistive load modulation, the load resistor R_{L} is connected in parallel with the third resistor R₃, the switch S controlled by the binary code is turned on or off, the on-off of the third resistor R₃ causes a change in the voltage in the circuit, the load resistor R_{L} is connected in parallel with the first capacitor C₁, the load resistor R_{L} is connected in series with the second resistor R₂, and the second resistor R₂ is connected in series with the first inductor L₁. The first inductor L₁and the second inductor L₂ are coupled, and the second inductor L₂ and the second capacitor C₂ are connected in series. Amplitude Shift Keying (ASK) can be realized, that is, signal modulation and transmission can be realized by adjusting the Amplitude of back scattering signal of the zero-power device. Similarly, in capacitive load modulation, the resonance frequency of the circuit can be changed by turning on and off the capacitor, and Frequency Shift Keying (FSK) can be realized, that is, signal modulation and transmission may be realized by adjusting the operating Frequency of the back scattering signal of the zero-power device.

With the help of load modulation, the zero-power device performs information modulation on the incoming wave signal, and realizes the process of back scattering communication. Zero-power devices have significant advantages: they do not actively transmit signals, so they do not need complex RF links, such as Power amplifiers (PA), RF filters, etc.; There is no need to actively generate a high-frequency signal, so there is no need for a high-frequency crystal oscillator; With back scattering communication, the signal transmission does not need to consume the power of the zero-power device itself.

### • Very low-power active transmission technology

The zero-power devices may also use very low-power active transmission technology. Unlike backscattering, when a zero-power device uses an very low-power active transmission technology for data transmission, the zero-power device needs to use a relatively simple and low-power oscillator to generate a radio frequency carrier, and then modulate the information to be transmitted to the radio frequency carrier. Based on current research, the power consumption of very low-power active transmitters can be as low as hundreds of microwatts, thus enabling ultra-low power data transmission.

Next, the coding method of zero-power communication is introduced.

FIG. 5 illustrates a schematic diagram of an encoding scheme provided by the related art. The data transmitted by electronic tags may be represented by binary "1" and "0" using different forms of code. Radio frequency identification systems typically use one of the following coding methods: Not Return to Zero (NRZ) coding, Manchester coding, Unipolar Return to Zero (URZ) coding, Differential Binary Phase (DBP) coding, Miller coding, and Differential coding. That is, different pulse signals may be used to represent 0 and 1.
- NRZ coding; The NRZ coding indicates a binary "1" with a high level and a binary "0" with a low level, and the NRZ coding in FIG. 5 shows a schematic of the levels of encoding binary data 101100101001011 using the NRZ method:.
- Manchester coding is also known as Split-Phase Coding. In Manchester coding, the binary value is represented by the change (rising or falling) in level at half a bit period within the bit length, a negative jump at half a bit period represents a binary "1", and a positive jump at half a bit period represents a binary "0", and an error in data transmission means that when the data bits sent by multiple electronic tags simultaneously have different values, the received rising and falling edges cancel each other, resulting in an uninterrupted carrier signal throughout the bit length. In the Manchester coding, there cannot be a state without change within the bit length. The reader/writer can use this error to determine the specific location where the collision occurred. Manchester coding is advantageous for finding errors in data transmission, and is usually used for data transmission from electronic tags to reader/writer when load modulation or back scattering modulation of carriers is used. The Manchester coding in FIG. 5 shows a schematic diagram of the levels of encoding binary data 101100101001011 using the Manchester method.
- URZ coding; The high level of the URZ encoding in the first half bit period represents a binary "1", while the low level signal lasting for the entire bit period represents a binary "1". The URZ coding in FIG. 5 shows a schematic diagram of the level of encoding binary data 101100101001011 using the URZ method.
- DBP coding; DBP coding has an arbitrary edge in half a bit period representing a binary "0" and no edge representing a binary "1", in addition, at the beginning of each bit period, the level is inverted. For the receiver, the bit beat is easier to reconstruct. DBP encoding in FIG. 5 shows a schematic diagram of the level of encoding binary data 101100101001011 using the DBP method.
- Miller coding; An arbitrary edge of the Miller encoding within half a bit period represents a binary "1", while an invariant level through the next bit period represents a binary "0". Alternating levels occur at the beginning of the bit period, and the bit beat is easier to reconstruct for the receiver. The Miller encoding in FIG. 5 shows a schematic diagram of the level of encoding binary data 101100101001011 using the Miller method.
- Differential coding; In differential coding, each binary "1" to be transmitted causes a change in the signal level, whereas for a binary "0", the signal level remains unchanged.

Next, the classification of zero-power devices is introduced.

Zero-power devices can be classified into the following types based on their power sources and usage methods.

### • Passive zero-power devices;

The zero-power device does not require a built-in battery, and when the zero-power device approaches the network device, the zero-power device is in the near-field range formed by the antenna radiation of the network device. The network device is, for example, a reader/writer of a Radio Frequency Identification (RFID) system. Therefore, the zero-power device antenna generates an induced current through electromagnetic induction, and the induced current drives the low power chip circuit of the zero-power device. The demodulation of the forward link signal and the signal modulation of the backward link are realized. For backscatter links, zero-power devices may transmit signals using backscatter or very low power active transmission methods. Passive zero-power devices do not need built-in batteries to drive either the forward link or the reverse link, so they are a zero-power device in the real sense. Passive zero-power device does not need batteries, and the radio frequency circuit and baseband circuit are very simple. For example, it does not need LNA, PA, crystal oscillator, Analog to Digital Converter (ADC) and other devices. It has many advantages such as small size, light weight, very cheap price and long service life.

### • semi-passive zero-power devices;

The semi-passive zero-power device itself is not equipped with a conventional battery, and the radio wave power can be harvested by using a radio frequency power harvesting module, and the harvested energy may be stored in a power storage unit, for example, the power storage unit is a capacitor. After the power storage unit obtains power, it can drive low-power chip circuits of zero-power devices. The demodulation of the forward link signal and the signal modulation of the backward link are realized. For backscatter links, zero-power devices may transmit signals using backscatter or very low power active transmission methods.

Semi-passive zero-power device does not need built-in battery to drive it in either the forward link or the reverse link. The power stored by the capacitor used in operation comes from the radio energy harvested by the radio frequency power harvesting module, which is a real zero-power device. Semi-passive zero-power device inherits many advantages of passive zero-power device, such as small size, light weight, very cheap price, long service life and many other advantages.

### •active zero-power device;

The zero-power devices used in some scenarios may also be active zero-power devices, and such zero-power devices may have built-in batteries. Batteries are used to drive low-power chip circuits of zero-power devices. The demodulation of the forward link signal and the signal modulation of the backward link are realized. However, for the backscatter link, the zero-power device may transmit the signal using backscatter or very low-power active transmission. Therefore, the zero-power of active zero-power devices is mainly reflected in the fact that the signal transmission of reverse link does not need to consume the power of the zero-power device itself, but uses the way of backscattering. In active zero-power devices, the built-in battery supplies power to the RFID chip, increasing the read-write distance of the tag and improving the reliability of communication. Therefore, it may be applied in some scenarios that require relatively high communication distance and reading delay.

Next, the classification of zero-power devices based on transmitter type is introduced.

### (1) Backscattering-based zero-power device;

Such zero-power devices use backscattering as described above for uplink data transmission. Such zero-power devices do not have active transmitters for active transmission, but only backscattering transmitters. Therefore, when the zero-power device transmits uplink data, the network device needs to provide a carrier, and the zero-power device performs backscattering based on the carrier to realize uplink data transmission.

### (2) Active transmitter-based zero-power device;

Such zero-power devices use an active transmitter with active transmitting capability for uplink data transmission, so when the uplink data is transmitted, the zero-power device can transmit uplink data by using its own active transmitter without needing a network device to provide a carrier. Active transmitters applied for zero-power devices can be, for example, ultra-low-power ASK transmitters, ultra-low-power FSK transmitters, etc. Based on the current implementation, the overall power consumption of such transmitters may be reduced to 400-600 microwatts when transmitting a signal of 100 microwatts.

### (3) zero-power device with backscatter and active transmitter

Such zero-power devices can support both backscattering and active transmitters. The zero-power device may determine whether to use backscattering or active transmitter for active transmission according to different situations (such as different amounts of electricity, different available ambient energy), or based on scheduling of the network device.

Next, the cellular Internet of Things is introduced.

Cellular IoT is booming. For example, the 3rd Generation Partnership Project (3GPP) has standardized IoT technologies such as Narrow Band-Internet of Things (NB-IoT), Machine-Type Communications (MTC), and RedCap. However, there are still many scenarios where IoT communication needs cannot be met, such as:

### • a harsh communication environment;

Some IoT scenarios may face extreme environments such as high temperature, extremely low temperature, high humidity, high pressure, high radiation or high-speed movement. Such as ultra-high voltage substation, high-speed train track monitoring, environmental monitoring in alpine zone, industrial production line, etc. In these scenarios, IoT terminal devices will not work due to the working environment limitations of conventional power supplies. In addition, the extreme working environment is also not conducive to the maintenance of IoT terminal devices, such as replacing batteries.

### • extremely small size terminal morphology requirements;

Some IoT communication scenarios, such as food traceability, commodity circulation, and smart wearable, require terminals to be extremely small in size to facilitate use in these scenarios. For example, IoT terminal devices for commodity management in the circulation link usually embed in commodity packaging in a very small form in the form of electronic labels. For another example, lightweight wearable IoT terminal devices can improve user experience while meeting user needs.

### • Extremely low-cost IoT communication requirements;

Numerous IoT communication scenarios require the cost of IoT terminal devices to be low enough, thereby enhancing the competitiveness relative to other alternative technologies. For example, in logistics or warehousing scenarios, in order to facilitate the management of a large number of articles in circulation, the Internet of Things terminal device can be attached to each article, so that the precise management of the whole process and whole cycle of logistics can be completed through the communication between the Internet of Things terminal device and the logistics network. These scenarios require the price of IoT terminal devices to be competitive enough.

Therefore, in order to cover these unmet IoT communication needs, it is also necessary to develop ultra-low-cost, extremely small-size, battery-free/maintenance-free IoT in cellular IoT, and zero-power IoT can just meet these needs.

Zero-power Internet of Things, also known as Ambient IoT, or passive Internet of Things. Ambient IoT devices refer to IoT devices that use various ambient energies, such as radio frequency energy, light energy, solar energy, heat energy, mechanical energy and other ambient energies to drive themselves. Such devices may have no energy reserve capacity or very limited energy storage capacity (such as using capacitors with a capacity of tens of microfarads). Compared with existing IoT devices, Ambient IoT devices have many advantages such as no conventional battery, no maintenance, small size, low complexity, low cost, and long life cycle.

Zero-power IoT may be used for at least the following four types of scenarios:
(1) Object identification, such as logistics, production line product management and supply chain management;
(2) Environmental monitoring, such as temperature, humidity and harmful gas monitoring of working environment and natural environment;
(3) Positioning, such as indoor positioning, intelligent object finding, production line item positioning, etc.;
(4) Intelligent control, such as intelligent control of various electrical appliances in smart homes (turning on and off air conditioners and adjusting temperatures) and intelligent control of various facilities in agricultural greenhouses (automatic irrigation and fertilization).

### Ambient IoT devices:

In NR systems and WIFI systems, battery-free and low cost of devices can support low-cost mass deployment and maintenance-free such as IoT devices. At present, the standard is studying how to support IoT devices based on ambient energy in NR systems and WiFi systems. The IoT devices based on ambient energy are called ambient IoT, AMP IoT devices. The power required for their work comes from ambient energy harvesting, which may be wireless signals, solar energy, thermal energy, etc. Such devices are similar to passive or semi-passive devices in zero-power communications.

A research project on Ambient IoT devices was carried out at RAN of 3GPP, and Ambient IoT devices were roughly classified into three device types: Device A, Device B and Device C, with corresponding complexity and communication capabilities respectively.
- Device A: It does not have energy storage capability and cannot transmit independent signals, that is, it uses backscattering transmission manner.
- Device B: It has energy storage capability and cannot transmit independent signals, that is, it uses backscattering transmission manner, and the stored energy can be used to amplify the backscattering signal.

Device C: It has energy storage capability, and can transmit independent signals, that is, it has active transmission capability.

Among them, device A has the lowest complexity and power consumption, which can be as low as 1 µW, but its communication distance is limited, generally only a few meters. Device A requires the network device to provide carrier signals for backscattering transmission. Device C generally has a large capacitor to store energy from the environment, and its power consumption can support hundreds of µW, which can support active signal transmission, and has a large communication distance. Device C does not need the network device to provide a carrier signal because it can perform active transmission. The complexity and power consumption of device B is between device A and device C.

In addition, the ambient energy harvesting supported by the zero-power terminal can also have many types, such as radio frequency, solar energy, thermal energy, mechanical energy and other energy. Among them, the zero-power terminal based on radio frequency energy harvesting may need the network to provide radio frequency power supply signals.

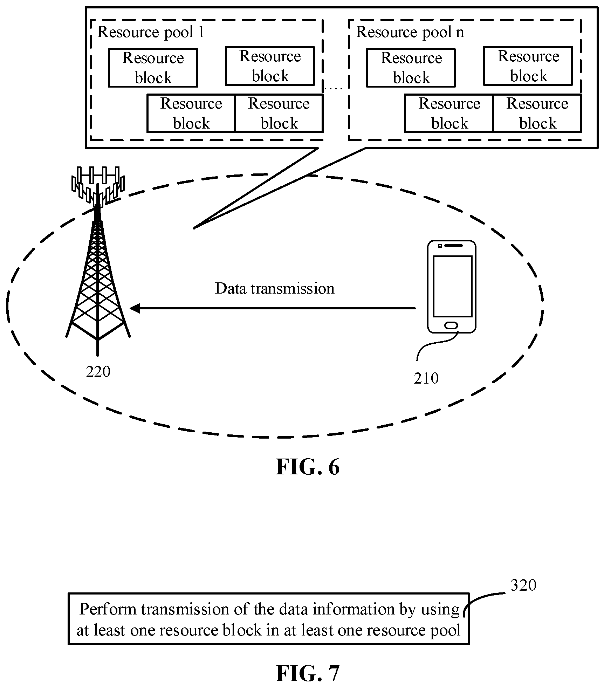

FIG. 6 illustrates a schematic diagram of a communication system provided by an exemplary embodiment of the present disclosure. The communication system includes a terminal device 210 and a network device 220.

The terminal device 210 is a device that operates by harvesting ambient energy. The terminal device 210 can transmit data information to the network device 220 that requires the use of one or more resource blocks belonging to all resource blocks or a part of resource blocks in a resource pool, that is, the terminal device 210 performs the transmission of data information by using at least one resource block in the at least one resource pool. The network device 220 may be an access network device in a cellular communication system, such as a base station.

FIG. 7 illustrates a flowchart a method for transmitting data information according to an exemplary embodiment of the present disclosure. The method is performed by a terminal device, and the terminal device is a device that operates by harvesting ambient energy. The terminal device is the terminal device illustrated in FIG. 6. The method includes the following operation.

In operation 320, transmission of data information is performed by using at least one resource block in at least one resource pool.

In some embodiments, the at least one resource pool is pre-configured or pre-agreed. The at least one resource pool is grouped according to at least one of: data type(s) that resource block(s) in the resource pool(s) can carry, resource block size(s), or interval(s) between resource blocks (which may also be referred to as period(s) of the resource blocks).

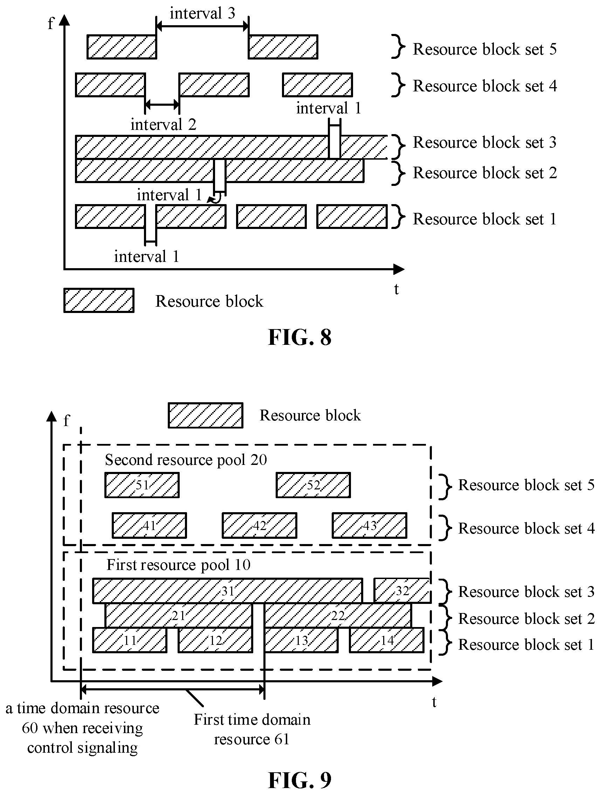

As illustrated in FIG. 8, if the data types that the resource block set 1 to the resource block set 3 can carry are data type A, and the data types that the resource block set 4 and the resource block set 5 can carry are data type B, the resource block set 1 to the resource block set 3 may be grouped into a resource pool, and the resource block set 4 and the resource block set 5 may be grouped into another resource pool. Alternatively, when grouping according to the resource block size, since the resource block sizes of the resource block set 1, the resource block set 4, and the resource block set 5 are the same, the resource block set 1, the resource block set 4, and the resource block set 5 may be grouped into a resource pool, the resource block set 2 may be grouped into a resource pool, and the resource block set 3 may be grouped into a resource pool. When grouping according to the interval between resource blocks, the resource block set 1 to the resource block set 3 having an interval 1 between resource blocks may be grouped into a resource pool, the resource block set 4 having an interval 2 between resource blocks may be grouped into a resource pool, and the resource block set 5 having an interval 3 between resource blocks may be grouped into a resource pool.

In addition, the above-mentioned methods for grouping the resource pool(s) may be implemented in combination, for example, the resource pool(s) is grouped according to the data type(s) that the resource block(s) can carry and the interval(s) between the resource block(s); or the resource pool(s) is grouped according to the resource block size(s) and the interval(s) between the resource blocks; or the resource pool(s) is grouped according to data type(s) that the resource block(s) can carry and resource block size(s); or the resource pool(s) is grouped according to the data type(s) that the resource block(s) can carry, the resource block size(s), and the interval(s) between the resource blocks. For example, the data types that the resource block set 1 to the resource block set 3 are the data type A, and the data type that the resource block set 4 and the resource block set 5 are the data type B. When the resource pools are grouped according to the data types that the resource blocks can carry and the intervals between the resource blocks, the data types are used as the main grouping basis and the intervals between the resource blocks are used as the secondary grouping basis, the resource block set 1 to the resource block set 3 may be grouped into a resource pool, the resource blocks in the resource pool can carry the data type A and the intervals between the resource blocks in the resource pool are less. The resource pool set 4 and the resource block set 5 are grouped into a resource pool, the resource blocks in the resource pool can carry the data type B and the intervals between the resource blocks in the resource pool is greater. Alternatively, when the resource pools are grouped according to the data types that the resource blocks can carry and the intervals between the resource blocks, the intervals between the resource blocks are used as the main grouping basis and the data types are used as the secondary grouping basis, the resource block set 1 to the resource block set 3 may be grouped into a resource pool, the resource block set 4 may be grouped into a resource pool, and the resource block set 5 may be grouped into a resource pool. In FIG. 8, "interval" referring to a portion between the time domain end position of a preceding resource block and the time domain start position of an immediately following resource block is taken as an example, but it is not excluded that "interval" refers to a portion between the time domain start position of a preceding resource block and the time domain start position of an immediately following resource block, or a portion between the time domain end position of a preceding resource block and the time domain end position of an immediately following resource block.

It should be noted that the embodiments of the present disclosure do not limit the measurement unit of the resource block size(s), the measurement unit of the interval(s) between the resource blocks, and the like. For example, the resource block size(s) may be defined according to the time domain resource and/or the frequency domain resource, and the interval(s) between the resource blocks may be defined according to the time domain interval and/or the frequency domain interval. The unit of the resource block size(s) and the unit of the interval between the resource blocks may be a time domain unit such as a symbol, a subframe, a frame, a microsecond, a millisecond, a second, or the like. The unit of the resource block size(s) and the unit of the interval between the resource blocks may be a frequency domain unit such as a subcarrier, a carrier, a Physical Resource Block (PRB), hertz, or the like. The resource block size may be represented by the data volume that the resource block can carry, that is, the unit of the resource block size may be a unit of data volume, such as bit, Byte, KB, MB, or the like.

In some embodiments, transmission of data information is performed by using at least one resource block in the at least one resource pool according to transmission information, and the transmission information is information for determining the at least one resource pool and/or the at least one resource block. The transmission information is determined based on at least one of following: a time domain resource when receiving the control signaling, a command type indicated by the control signaling, data type, data volume, an energy storage state of the terminal device, a device identifier of the terminal device, or a resource utilization rate of each of the at least one resource pool.

In some embodiments, the transmission information includes at least one piece of following information: resource pool identifier(s) of the at least one resource pool; position information of at least one resource pool, the position information including at least one of time domain position information or frequency domain position information; resource block identifier(s) of at least one resource block; position information of at least one resource block, the position information including at least one of time domain position information or frequency domain position information; or period(s) of at least one resource block. The time domain position information includes at least one of a time domain start point, a time domain end point, or a time domain length, and the frequency domain position information includes at least one of a frequency domain start point, a frequency domain end point, or a frequency domain length.

In some embodiments, the terminal device receives a resource utilization rate of each of the at least one resource pool sent by the network device. The terminal device periodically receives a resource utilization rate of each of the at least one resource pool. The resource utilization rate is calculated based on periodically occupied resource(s) in the resource pool, aperiodically occupied resource(s) allocated by the network device, and usable resource(s) in the resource pool. The resource utilization rate is used to indicate the usage case of the resource pool within a certain time domain resource.

For example, time-domain position information of at least one resource pool and/or time-domain position information of at least one resource block to be used by the terminal device when performing transmission of data information is determined according to a time-domain resource when receiving control signaling; or a period of at least one resource block to be used by the terminal device when performing transmission of data information is determined according to the command type; or the range information of at least one resource pool and/or the range information of at least one resource block to be used by the terminal device when performing the transmission of data information is determined according to the data volume, or the like.

In some embodiments, at least one resource pool is configured during a registration process; or, the at least one resource pool is configured in a wake-up signal; or, the at least one resource pool is configured in control signaling.

For example, at least one resource pool belongs to a resource pool pre-generated by a network device, and the network device reserves one or more sets of resource blocks according to a command type, a data type and a data volume to constitute one or more resource pools. In the registration process of the terminal device, the network device configures at least one of the pre-generated one or more resource pools for use by the terminal device; or when the network device needs to wake up the terminal device to transmit data information, at least one of the pre-generated one or more resource pools is configured for use by the terminal device, and the at least one resource pool may be any several resource pools among the pre-generated one or more resource pools, or may be at least one resource pool selected by the network device for the terminal device according to the data type and/or data volume expected to be transmitted by the terminal device and matched with the data type and/or data volume; or, when the network device instructs the terminal device to transmit data information by using the control signaling, at least one of the pre-generated one or more resource pools is configured for use by the terminal device, and the at least one resource pool may be any several resource pools among the pre-generated one or more resource pools, or may be at least one resource pool selected by the network device for the terminal device by using at least one of a command type, a data type, and a data volume indicated by the control signaling and matched with the above information indicated by the control signaling.

In some embodiments, the at least one resource block in the at least one resource pool may be understood as at least one resource block in a set of resource blocks configured by the network device, and may also be understood as at least one resource block configured by the network device. The at least one resource block is located within the at least one resource pool.

In summary, the method provided by the embodiment of the present disclosure designs a transmission method of data information of a terminal device that operates by harvesting ambient energy, and causes the terminal device to perform transmission of data information by using resource block(s) in a pre-configured resource pool, which can not only meet the data transmission requirements of the terminal device, but also can transmit without receiving dynamically scheduled control signaling or only receiving a few bits of control signaling compared with the traditional process in which the terminal device requests to obtain resources and then performs data transmission, thus saving the energy consumption of the terminal device and facilitating adaptation of different types of terminal devices that operate by harvesting ambient energy. In addition, the terminal device can also determine at least one transmission pool and/or at least one transmission block to be specifically used based on the transmission information, and the determination factors of the transmission information include information related to data transmission and the self-state of the terminal device, that is, the at least one resource pool and/or at least one resource block to be used is determined based on the information related to data transmission and the self-state of the terminal device, and different influencing factors when the terminal device performs data transmission are shown.

The at least one resource pool and/or the at least one resource block used by the terminal device is determined based on at least one of the following two manners:

Determination manner 1: determining based on the information indicated by the control signaling sent by the network device;

Determination manner 2: determining by the terminal device.

Hereinafter, the above two determination manners will be described in sequence, but the order in which the two determination manners are introduced does not limit the advantages and disadvantages of the two implementation manners.

**Determination manner 1: determining based on information indicated by control signaling sent by the network device.**

In an alternative embodiment based on FIG. 7, the method further includes operation 310, and operation 320 may be implemented to be the operation 321.

In the operation 310, control signaling is received, and the control signaling is used for instructing the terminal device to perform transmission of data information by using at least one resource pool and/or at least one resource block.

In some embodiments, the information indicated by the control signaling includes at least one of a command type, a type of data that needs to be transmitted, data volume that needs to be transmitted, or a device identifier of the terminal device. The device identifier of the terminal device is a physical identifier or a logical identifier, the physical identifier is an identifier uniquely indicating the terminal device, the logical identifier is an identifier uniquely indicating the terminal device within a range covered by the network device, and the length of the logical identifier is generally shorter than the physical identifier.

Alternatively, there is a correspondence among the command type, the type of data that needs to be transmitted, and the data volume that needs to be transmitted. For example, the state query command corresponds to data type A; or the state query command corresponds to the data type A, and the corresponding data volume is 8 bits; or, the sensor data reporting command corresponds to data volumes of 16 bits, 32 bits and 64 bits; or, the sensor data reporting command corresponds to the data type B; or data type B corresponds to data volumes of 16 bits, 32 bits, and 64 bits.

In the operation 321, transmission of data information is performed by using at least one resource pool and/or at least one resource block based on an instruction of control signaling.

In some embodiments, transmission of data information is performed by using at least one resource pool and/or at least one resource block according to transmission information. The transmission information is information for determining at least one resource pool and/or at least one resource block. The transmission information is determined based on at least one of: a time domain resource when receiving the control signaling, a command type indicated by the control signaling, a type of data, that needs to be transmitted, indicated by the control signaling, data volume, that needs to be transmitted, indicated by the control signaling, or a device identifier of the terminal device.

As illustrated in FIG. 9, there are the first resource pool 10 and the second resource pool 20, and the first resource pool includes a resource block seₜ1 to a resource block set 3, a total of three resource block sets, the maximum data volume that can be carried by the resource blocks in the resource block set 1 is 8 bits, the maximum data volume that can be carried by the resource blocks in the resource block set 2 is 16 bits, and the maximum data volume that can be carried by the resource blocks in the resource block set 3 is 32 bits. The intervals between the resource blocks in the resource block set 1 to the resource block set 3 are the same, and are all intervals 1. The data type that can be carried by the resource blocks in the resource block sets 1 to 3 is the data type A. The second resource pool 20 includes a resource block set 4 and a resource block set 5, and the maximum data volume that can be carried by the resource blocks in the resource block set 4 and the resource block set 5 is 8 bits. The interval between the resource blocks in the resource block set 4 is interval 2, and the interval between the resource blocks in the resource block set 5 is interval 3. The data type that can be carried by the resource blocks in the resource block set 4 and the resource block set 5 is the data type B. The information indicated by the control signaling includes: the data type that needs to be transmitted is the data type A, and the data volume that needs to be transmitted is 13 bits. The terminal device performs transmission of data information by using the resource block 22 in the first resource pool 10 after receiving the control signaling based on the instruction of the control signaling. The time domain resource corresponding to the resource block 22 differs from the time domain resource 60 when receiving the control signaling by the first time domain resource 61. The first time domain resource 61 may also be referred to as a time offset, which may be represented as t_{ul-offset}. The first resource pool 10 is a resource pool that matches the data type A, that is, at least one resource block in the first resource pool can carry data information of the data type A. The resource block size in the first resource pool 10 includes 8 bits, 16 bits and 32 bits, and the resource block 22 belongs to the resource block set 2, and the resource block size corresponding to the resource block 22 is 16 bits. Alternatively, the information indicated by the control signaling includes: the data type that needs to be transmitted is the data type A, and the data volume that needs to be transmitted is 13 bits. The terminal device performs transmission of data information by using the resource block 21 in the first resource pool 10 after receiving the control signaling based on the instruction of the control signaling. The resource block 21 is the first resource block that supports the terminal device to complete the transmission of data information after the terminal device receives the control signaling. In this scenario, the stored energy of the terminal device itself is insufficient to transmit by using the resource block 31, or the terminal device expects to perform the transmission of data information by using the least energy. Alternatively, the information indicated by the control signaling includes: the data type that needs to be transmitted is the data type A, and the data volume that needs to be transmitted is 13 bits. The terminal device performs transmission of data information by using the resource block 31 in the first resource pool 10 after receiving the control signaling based on the instruction of the control signaling. The resource block 31 is the first resource block that supports the terminal device to complete the transmission of data information after the terminal device receives the control signaling. In this scenario, the stored energy of the terminal device itself is relatively sufficient, and the terminal device does not care about the excess energy consumption caused by using the larger resource block.

In summary, according to the method provided by the embodiment of the present disclosure, the terminal device uses at least one resource block in at least one resource pool to perform transmission of data information according to the information indicated by the control signaling sent by the network device, which can not only meet the data transmission requirements of the terminal device, but also can transmit without receiving dynamically scheduled control signaling or only receiving a few bits of control signaling compared with the traditional process in which the terminal device requests to obtain resources and then performs data transmission, thus saving the energy consumption of the terminal device and facilitating adaptation of different types of terminal devices that operate by harvesting ambient energy. In addition, since the resource block that is used by the terminal device to perform transmission of data information is instructed by the network device, the probability of data collision caused by different terminal devices using the same resource block can be greatly reduced.

**Determination manner 2: Determining by the terminal device.**

In an alternative embodiment based on FIG. 7, the operation 320 may be implemented to be the operation 322.

In the operation 322, at least one resource pool and/or at least one resource block is selected to perform transmission of data information.

The terminal device actively selects at least one resource pool and/or at least one resource block to perform transmission of data information. The at least one resource pool and/or at least one resource block is actively selected by the terminal device. For example, when the terminal device is configured with only one resource pool, the terminal device only needs to select at least one resource block in the resource pool to perform transmission of data information; or when the data type that needs to be transmitted by the terminal device corresponds to only one resource pool, the terminal device selects at least one resource block in the resource pool to perform transmission of data information.

In some embodiments, when the terminal device receives different trigger signals, the terminal device selects at least one resource pool and/or at least one resource block to perform transmission of data information. The trigger signal includes at least one of a wake-up signal, control signaling, or a trigger event. That is, the terminal device selects at least one resource block in the at least one resource pool to perform transmission of data information in a case that a wake-up signal or control signaling is received or a trigger event is present. Alternatively, the wake-up signal includes the control signaling.

In some embodiments, transmission of data information is performed by using at least one resource pool and/or at least one resource block according to transmission information. The transmission information is information for determining at least one resource pool and/or at least one resource block. The transmission information is determined based on at least one of: a resource utilization rate of each of the at least one resource pool, a command type indicated by the control signaling, a data type, a data volume, an energy storage state of the terminal device, or a device identifier of the terminal device. The data type and the data volume are information indicated by the control signaling; or, the data type and the data volume are acquired by the terminal device according to the data information that needs to be transmitted by the terminal device. The device identifier of the terminal device is information indicated by the control signaling; or information stored by the terminal device itself.

In some embodiments, the terminal device receives a resource utilization rate of each of the at least one resource pool sent by the network device. The terminal device periodically receives a resource utilization rate of each of the at least one resource pool. The resource utilization rate is calculated based on periodically occupied resource(s) in the resource pool, aperiodically occupied resource(s) allocated by the network device, and usable resource(s) in the resource pool. The resource utilization rate is used to indicate the usage case of the resource pool within a certain time domain resource.

For example, in a case that the terminal device receives the wake-up signal, the terminal device selects at least one resource pool and/or at least one resource block to perform transmission of data information. The wake-up signal carries control signaling. The control signaling indicates at least one resource pool that can be used by the terminal device for transmission of data information this time and a command type. The terminal device acquires a data type and a data volume that need to be transmitted. Further, the terminal device selects one resource pool among at least one resource pool according to the data type and the data amount that needs to be transmitted. For example, preliminary screening is performed according to the data type that needs to be transmitted to obtain at least one resource pool after preliminary screening, and a resource pool whose resource block size is closest to the data size among the at least one resource pool after preliminary screening is selected according to the data volume. After the resource pool is determined, at least one resource block in the resource pool may be randomly selected to perform transmission of data information, at least one resource block in the resource pool may be selected to perform transmission of data information according to the data volume, or at least one resource block in the resource pool may be selected to perform transmission of data information according to the energy storage state of the terminal device.

For example, when the wake-up signal is received, the energy storage state of the terminal device is not sufficient to support the terminal device to perform transmission of data information using any resource block, and therefore, the terminal device continues to harvest energy until the energy stored by the terminal device is sufficient for the terminal device to perform transmission of data information, and then selects the first resource block that supports transmission of data information this time to perform transmission of data information; or, the terminal device needs to periodically perform transmission of data information, and according to the energy storage state of the terminal device, when the energy storage state of the terminal device is low and/or the speed of energy harvesting is slow, the terminal device performs transmission of data information according to a long transmission period. When the energy storage state of the terminal device is high and/or the speed of energy harvesting is fast, the terminal device performs transmission of data information in a short transmission period.

Alternatively, in order to avoid data collision as much as possible, first information is calculated according to the device identifier of the terminal device, and at least one resource pool and/or at least one resource block used by the terminal device is determined based on the first information. The first information may be time domain position information and/or frequency domain position information, and may be a sequence number of a resource pool and/or a resource block.

For example, a binary sequence of fixed length, such as an 8-bit binary sequence, is generated according to the device identifier of the terminal device. The first information is obtained by mapping all bits or part bits of the binary sequence, for example, the first 4 bits of the 8-bit binary sequence are used to represent frequency domain position information, and the last 4 bits are used to represent time domain position information, and the first information is time domain position information and/or frequency domain position information; or the first 2 bits are used to represent time domain position information, the last 6 bits are used to represent frequency domain position information, and the first information is time domain position information and/or frequency domain position information; or, the first 4 bits are used to represent the sequence number of the resource pool, the last 4 bits are used to represent the sequence number of the resource block, and the first information is the sequence number of the resource pool and/or the resource block; or the first 2 bits are used to represent the sequence number of the resource pool, the last 6 bits are used to represent the sequence number of the resource block, and the first information is the sequence number of the resource pool and/or the resource block. This is not limited in the embodiments of the present disclosure.

In some embodiments, a binary sequence of fixed length is obtained by performing modulo-2 division on the device identifier of the terminal device using a generator polynomial, and the fixed length is the highest bit index of the generative polynomial. For example, the generative polynomial is x⁷+ x³+ x +1, and the generative polynomial may be represented to be 10001011. If the device identifier of the terminal device is 110010011, the calculated binary sequence is 1011101, and if the fixed length is 8 bits, the final binary sequence of fixed length is 01011101. For the above-mentioned specific operations, reference may be made to the process of obtaining a check code by generative polynomial during CRC check.

In some embodiments, the terminal device selects at least one resource pool and/or at least one resource block to perform transmission of data information in the presence of a trigger event. The trigger event is, such as, sensor alarms, timer timeouts, terminal device failures, etc. In this case, there is generally no information indicated by the control signaling. The terminal device can firstly select at least one resource pool whose resource utilization rate is lower than the first threshold according to the resource utilization rate of each of the at least one resource pool, and the probability of data collision can be effectively reduce by this method, and then a resource pool whose resource block size is closest to the data size is selected from the above resource pool(s), and finally the first information is calculated according to the device identifier of the terminal device, and at least one resource block in the resource pool is selected according to the first information to perform transmission of data information.

In summary, the method provided by the embodiment of the present disclosure can effectively reduce the data interaction between the terminal device and the network device in the data transmission process by selecting at least one resource block in at least one resource pool by the terminal device, thereby saving the energy consumption of the terminal device and improving the resource utilization rate. In addition, when the terminal device makes the selection, the resource block(s) can be selected by the resource utilization rate of each of the at least one resource pool, the first information calculated based on the device identifier of the terminal device, and the like, and the probability of data collision can be reduced when multiple terminal devices have data transmission requirements at the same time.

In some embodiments, determination manner 1 and determination manner 2 may be implemented in combination. For example, in a case that there are few terminal devices that need to perform transmission of data information, the determination manner 2 is preferentially used, and in this scenario, the probability of occurrence of data collision is low even if the resource block used is completely selected by the terminal device, so that the operation that the network device instructs the terminal device to perform transmission of data information by control signaling or a wake-up signal is reduced, and the terminal device performs selection as much as possible, so that the possibility of data collision can be kept low and the terminal device can save energy consumption caused by frequent reception of signals. When there are a large number of terminal devices that need to perform the transmission of data information, the determination manner 1 is preferentially used, and the probability of occurrence of data collision is reduced as much as possible by mainly performing adjustment by the network device.

In some embodiments, the transmission information for determining the at least one resource pool and/or the at least one resource block includes at most five types of transmission information. Based on the above two determination manners, there may be three combinations as follows.

Combination 1: Determining all or part of the transmission information by control signaling.

Combination 2: The terminal selects by itself, so as to determine all or part of the transmission information.

Combination 3: The first part of transmission information is determined by the control signaling, and the second part of transmission information is determined by selecting by the terminal, the first part of transmission information and the second part of transmission information are not overlapped, and the first part of transmission information and the second part of transmission information are all or part of the transmission information.

Exemplarily, resource pool identifier(s) of at least one resource pool is determined according to a command type indicated by the control signaling, resource block identifier(s) of at least one resource block is determined according to a type of data and/or data volume that needs to be transmitted indicated by the control signaling; or, the position information of at least one resource pool is determined according to the command type indicated by the control signaling, and the position information of at least one resource block is determined according to the data type and/or data volume that needs to be transmitted indicated by the control signaling; or, period(s) of at least one resource block and resource pool identifier(s) of at least one resource pool are determined according to a command type indicated by the control signaling, and resource block identifier(s) of at least one resource block is determined according to a data type and/or data volume that needs to be transmitted indicated by the control signaling; or, period(s) of at least one resource block and position information of at least one resource pool are determined according to a command type indicated by the control signaling, and position information of at least one resource block is determined according to a data type and/or data volume that needs to be transmitted indicated by the control signaling; or, resource pool identifier(s) of at least one resource pool is determined according to a command type indicated by the control signaling, and resource block identifier(s) of at least one resource block is determined according to a device identifier of the terminal device; or, the position information of at least one resource pool is determined according to the command type indicated by the control signaling, and the position information of at least one resource block is determined according to the device identifier of the terminal device; or, resource pool identifier(s) of at least one resource pool is determined according to the data type and/or data volume that needs to be transmitted indicated by the control signaling, and resource block identifier(s) of at least one resource block is determined according to the device identifier of the terminal device; or, the position information of at least one resource pool is determined according to the data type and/or the data volume that needs to be transmitted indicated by the control signaling, and the position information of at least one resource block is determined according to the device identifier of the terminal device; or, resource pool identifier(s) of at least one resource pool is determined according to a command type indicated by the control signaling, and resource block identifier(s) of at least one resource block is determined according to a time domain resource when receiving the control signaling; or, position information of at least one resource pool is determined according to a command type indicated by the control signaling, and position information of at least one resource block is determined according to a time domain resource when receiving the control signaling; or, resource pool identifier(s) of at least one resource pool is determined according to a data type and/or data volume that needs to be transmitted indicated by the control signaling, and resource block identifier(s) of at least one resource block is determined according to a time domain resource when receiving the control signaling; or, the position information of at least one resource pool is determined according to the data type and/or the data volume that needs to be transmitted indicated by the control signaling, and the position information of at least one resource block is determined according to the time domain resource when receiving the control signaling.

Exemplarily, the terminal device determines resource pool identifier(s) of at least one resource pool according to a resource utilization rate of each of the at least one resource pool, and determines resource block identifier(s) of at least one resource block according to a data type and/or data volume that needs to be transmitted; or, the terminal device determines the position information of at least one resource pool according to the resource utilization rate of each of the at least one resource pool, and determines the position information of at least one resource block according to the data type and/or data volume that needs to be transmitted; or, the terminal device determines period(s) of at least one resource block according to a command type indicated by the control signaling, determines resource pool identifier(s) of at least one resource pool according to a resource utilization rate of each of the at least one resource pool, and determines resource block identifier(s) of at least one resource block according to a data type and/or data volume that needs to be transmitted; or, the terminal device determines period(s) of the at least one resource block according to the command type indicated by the control signaling, determines the position information of the at least one resource pool according to the resource utilization rate of each of the at least one resource pool, and determines the position information of the at least one resource block according to the data type and/or data volume that needs to be transmitted; or, the terminal device determines resource pool identifier(s) of at least one resource pool according to a resource utilization rate of each of the at least one resource pool, and determines resource block identifier(s) of at least one resource block according to an energy storage state of the terminal device; or, the terminal device determines resource pool identifier(s) of at least one resource pool according to a resource utilization rate of each of the at least one resource pool, and determines resource block identifier(s) of at least one resource block according to a device identifier of the terminal device; or, the terminal device determines the position information of at least one resource pool according to the resource utilization rate of each of the at least one resource pool, and determines the position information of at least one resource block according to the energy storage state of the terminal device; or, the terminal device determines the position information of at least one resource pool according to the resource utilization rate of each of the at least one resource pool, and determines the position information of at least one resource block according to the device identifier of the terminal device.

Exemplarily, the resource pool identifier(s) of the at least one resource pool is determined according to the command type indicated by the control signaling, that is, the at least one resource pool is determined based on the control signaling, the terminal device selects at least one resource block from the at least one resource pool determined based on the control signaling according to the data type and/or the data volume that needs to be transmitted, and determines the resource block identifier(s) of the at least one resource block; or, position information of at least one resource pool is determined according to a command type indicated by the control signaling, that is, at least one resource pool is determined based on the control signaling, the terminal device selects at least one resource block from the at least one resource pool determined based on the control signaling according to a data type and/or data volume that needs to be transmitted, and determines position information of the at least one resource block; or, the resource pool identifier(s) of the at least one resource pool and the position information of the partial resource block are determined according to the command type indicated by the control signaling, that is, the at least one resource pool and the partial resource block(s) supporting transmission of the data information are determined based on the control signaling, the terminal device selects at least one resource block from the partial resource blocks of the at least one resource pool determined based on the control signaling according to the data type and/or the data volume that needs to be transmitted, and determines the resource block identifier(s) of the at least one resource block; or, the resource pool identifier(s) of the at least one resource pool and the resource block identifier(s) of the partial resource block(s) are determined according to the command type indicated by the control signaling, that is, the at least one resource pool and the partial resource block(s) supporting transmission of the data information are determined based on the control signaling, the terminal device selects at least one resource block from the partial resource block(s) of the at least one resource pool determined based on the control signaling according to the data type and/or the data volume that needs to be transmitted, and determines the resource block identifier(s) of the at least one resource block; or, the position information of at least one resource pool and the position information of the partial resource block(s) are determined according to the command type indicated by the control signaling, that is, the at least one resource pool and the partial resource block(s) supporting transmission of the data information are determined based on the control signaling, the terminal device selects at least one resource block from the partial resource block(s) of the at least one resource pool determined based on the control signaling according to the data type and/or the data volume that needs to be transmitted, and determines the position information of the at least one resource block; or, the position information of the at least one resource pool and the resource block identifier(s) of the partial resource block(s) are determined according to the command type indicated by the control signaling, that is, the at least one resource pool and the partial resource block(s) supporting transmission of the data information are determined -based on the control signaling, the terminal device selects at least one resource block from the partial resource block(s) of the at least one resource pool determined based on the control signaling according to the data type and/or the data volume that needs to be transmitted, and determines the position information of the at least one resource block; or, the period(s) of the at least one resource block and the resource pool identifier(s) of the at least one resource pool are determined according to the command type indicated by the control signaling, that is, the at least one resource pool is determined based on the control signaling, the terminal device selects at least one resource block from the at least one resource pool determined based on the control signaling according to the data type and/or the data volume that needs to be transmitted, and determines the resource block identifier(s) of the at least one resource block; or, the period(s) of the at least one resource block and the position information of the at least one resource pool are determined according to the command type indicated by the control signaling, that is, the at least one resource pool is determined based on the control signaling, the terminal device selects at least one resource block from the at least one resource pool determined based on the control signaling according to the data type and/or data volume that needs to be transmitted, and determines the position information of the at least one resource block; or, resource pool identifier(s) of at least one resource pool is determined according to a command type indicated by the control signaling, that is, at least one resource pool is determined based on the control signaling, and the terminal device selects at least one resource block from the at least one resource pool determined based on the control signaling according to the device identifier of the terminal device, and determines resource block identifier(s) of the at least one resource block; or, position information of at least one resource pool is determined according to a command type indicated by the control signaling, that is, at least one resource pool is determined based on the control signaling, and the terminal device selects at least one resource block from the at least one resource pool determined based on the control signaling according to a device identifier of the terminal device, and determines position information of the at least one resource block; or, the resource pool identifier(s) of the at least one resource pool and the position information of the partial resource block(s) are determined according to the command type indicated by the control signaling, that is, the at least one resource pool and the partial resource block(s) supporting transmission of the data information are determined based on the control signaling, the terminal device selects at least one resource block from the partial resource block(s) of the at least one resource pool determined based on the control signaling according to the device identifier of the terminal device, and determines the resource block identifier(s) of the at least one resource block; or, resource pool identifier(s) of at least one resource pool and resource block identifier(s) of partial resource block(s) are determined according to a command type indicated by the control signaling, that is, at least one resource pool and partial resource block(s) supporting transmission of data information are determined based on the control signaling, and the terminal device selects at least one resource block from the partial resource block(s) of at least one resource pool determined based on the control signaling according to the device identifier of the terminal device, and determines resource block identifier(s) of the at least one resource block; or, position information of at least one resource pool and position information of partial resource block(s) are determined according to a command type indicated by the control signaling, that is, at least one resource pool and partial resource block(s) supporting transmission of data information are determined based on the control signaling, the terminal device selects at least one resource block from the partial resource block(s) of the at least one resource pool determined based on the control signaling according to the device identifier of the terminal device, and determines position information of the at least one resource block; or, the position information of at least one resource pool and the resource block identifier(s) of the partial resource block(s) are determined according to the command type indicated by the control signaling, that is, the at least one resource pool and the partial resource block(s) supporting transmission of the data information are determined based on the control signaling, and the terminal device selects at least one resource block from the partial resource block(s) of the at least one resource pool determined based on the control signaling according to the device identifier of the terminal device, and determines the position information of the at least one resource block; or, the period(s) of the at least one resource block and the resource pool identifier(s) of the at least one resource pool are determined according to the command type indicated by the control signaling, that is, the at least one resource pool is determined based on the control signaling, the terminal device selects at least one resource block from the at least one resource pool determined based on the control signaling according to the device identifier of the terminal device, and determines the resource block identifier(s) of the at least one resource block; or, the period(s) of the at least one resource block and the position information of the at least one resource pool are determined according to the command type indicated by the control signaling, that is, the at least one resource pool is determined based on the control signaling, the terminal device selects at least one resource block from the at least one resource pool determined based on the control signaling according to the device identifier of the terminal device, and determines the position information of the at least one resource block; or, resource pool identifier(s) of at least one resource pool is determined according to a command type indicated by the control signaling, that is, at least one resource pool is determined based on the control signaling, the terminal device selects at least one resource block from the at least one resource pool determined based on the control signaling according to an energy storage state of the terminal device, and determines resource block identifier(s) of the at least one resource block; or, position information of at least one resource pool is determined according to a command type indicated by the control signaling, that is, at least one resource pool is determined based on the control signaling, and the terminal device selects at least one resource block from the at least one resource pool determined based on the control signaling according to an energy storage state of the terminal device, and determines position information of the at least one resource block; or, the resource pool identifier(s) of the at least one resource pool and the position information of the partial resource block(s) are determined according to the command type indicated by the control signaling, that is, the at least one resource pool and the partial resource block(s) supporting transmission of the data information are determined based on the control signaling, and at least one resource block is selected from the partial resource block(s) of the at least one resource pool determined based on the control signaling according to the energy storage state of the terminal device, and the resource block identifier(s) of the at least one resource block is determined; or, resource pool identifier(s) of at least one resource pool and resource block identifier(s) of partial resource block(s) are determined according to a command type indicated by the control signaling, that is, at least one resource pool and partial resource block(s) supporting transmission of data information are determined based on the control signaling, the terminal device selects at least one resource block from the partial resource block(s) of at least one resource pool determined based on the control signaling according to an energy storage state of the terminal device, and determines resource block identifier(s) of the at least one resource block; or, position information of at least one resource pool and position information of partial resource block(s) are determined according to a command type indicated by the control signaling, that is, at least one resource pool and partial resource block(s) supporting transmission of data information are determined based on the control signaling, the terminal device selects at least one resource block from the partial resource block(s) of the at least one resource pool determined based on the control signaling according to an energy storage state of the terminal device, and determines position information of the at least one resource block; or, the position information of at least one resource pool and the resource block identifier(s) of the partial resource block(s) are determined according to the command type indicated by the control signaling, that is, the at least one resource pool and the partial resource block(s) supporting transmission of the data information are determined based on the control signaling, the terminal device selects at least one resource block from the partial resource block(s) of the at least one resource pool determined based on the control signaling according to the energy storage state of the terminal device, and determines the position information of the at least one resource block; or, period(s) of at least one resource block and resource pool identifier(s) of at least one resource pool are determined according to a command type indicated by the control signaling, that is, at least one resource pool is determined based on the control signaling, and at least one resource block is selected from at least one resource pool determined based on the control signaling according to an energy storage state of the terminal device, and resource block identifier(s) of the at least one resource block are determined; or, period(s) of at least one resource block and position information of at least one resource pool are determined according to a command type indicated by the control signaling, that is, at least one resource pool is determined based on the control signaling, the terminal device selects at least one resource block from the at least one resource pool determined based on the control signaling according to an energy storage state of the terminal device, and determines position information of the at least one resource block; or, resource pool identifier(s) of at least one resource pool is determined according to a data type and/or data volume indicated by the control signaling, that is, at least one resource pool is determined based on the control signaling, and the terminal device selects at least one resource block from the at least one resource pool determined based on the control signaling according to the device identifier of the terminal device, and determines resource block identifier(s) of the at least one resource block; or, position information of at least one resource pool is determined according to the data type and/or the data volume indicated by the control signaling, that is, at least one resource pool is determined based on the control signaling, and at least one resource block is selected from the at least one resource pool determined based on the control signaling according to the device identifier of the terminal device, and position information of the at least one resource block is determined; or, resource pool identifier(s) of at least one resource pool and position information of partial resource block(s) are determined according to a data type and/or data volume indicated by the control signaling, that is, at least one resource pool and partial resource block(s) supporting transmission of the data information are determined based on the control signaling, and at least one resource block is selected from the partial resource block(s) of at least one resource pool determined based on the control signaling according to the device identifier of the terminal device, and resource block identifier(s) of the at least one resource block is determined; or, resource pool identifier(s) of at least one resource pool and resource block identifier(s) of partial resource block(s) are determined according to a data type and/or data volume indicated by the control signaling, that is, at least one resource pool and partial resource block(s) supporting transmission of data information are determined based on the control signaling, and the terminal device selects at least one resource block from the partial resource block(s) of at least one resource pool determined based on the control signaling according to the device identifier of the terminal device, and determines resource block identifier(s) of the at least one resource block; or, the position information of at least one resource pool and the position information of partial resource block(s) are determined according to the data type and/or the data volume indicated by the control signaling, that is, the at least one resource pool and partial resource block(s) supporting transmission of the data information are determined based on the control signaling, and the terminal device selects at least one resource block from the partial resource block(s) of the at least one resource pool determined based on the control signaling according to the device identifier of the terminal device to determine the position information of the at least one resource block; or, the position information of at least one resource pool and the resource block identifier(s) of the partial resource block are determined according to the data type and/or the data volume indicated by the control signaling, that is, the at least one resource pool and the partial resource block(s) supporting transmission of the data information are determined based on the control signaling, the terminal device selects at least one resource block from the partial resource block(s) of the at least one resource pool determined based on the control signaling according to the device identifier of the terminal device, and determines the position information of the at least one resource block; or, resource pool identifier(s) of at least one resource pool is determined according to a command type indicated by the control signaling, that is, at least one resource pool is determined based on the control signaling, period(s) of at least one resource block is determined according to an energy storage state of the terminal device, at least one resource block is selected from the at least one resource pool determined based on the control signaling, and resource block identifier(s) of the at least one resource block is determined; or, the position information of the at least one resource pool is determined according to the command type indicated by the control signaling, that is, the at least one resource pool is determined based on the control signaling, the period(s) of the at least one resource block is determined according to the energy storage state of the terminal device, at least one resource block is selected from the at least one resource pool determined based on the control signaling, and the position information of the at least one resource block is determined; or, resource pool identifier(s) of at least one resource pool is determined according to a command type indicated by the control signaling, that is, at least one resource pool is determined based on the control signaling, period(s) of at least one resource block is determined according to an energy storage state of the terminal device, at least one resource block is selected from the at least one resource pool determined based on the control signaling according to the device identifier of the terminal device, and resource block identifier(s) of the at least one resource block is determined; or, the position information of the at least one resource pool is determined according to the command type indicated by the control signaling, that is, the at least one resource pool is determined based on the control signaling, the terminal device determines the period(s) of the at least one resource block according to the energy storage state of the terminal device, and selects at least one resource block from the at least one resource pool determined based on the control signaling according to the device identifier of the terminal device, and determines the position information of the at least one resource block.

In an alternative embodiment based on FIG. 7, the method further includes the operation 330 and operation 340.

In operation 330, a retransmission command sent by the network device is received, and the retransmission command is used to instruct the terminal device to reperform the transmission of data information.

In some embodiments, the terminal device receives the retransmission command sent by the network device, and the retransmission command indicates resource block(s) used by the terminal device when performing the retransmission; or, the retransmission command indicates at least one resource pool used by the terminal device when performing retransmission; or, the retransmission command instructs the terminal device to reselect at least one resource block in the at least one resource pool to perform transmission of data information.

In operation 340: retransmission of data information is performed according to the resource block(s) indicated by the retransmission command; or, according to the retransmission command, at least one resource block in the at least one resource pool is selected to perform retransmission of the data information.

In some embodiments, the retransmission command uses the second information to indicate at least one resource pool and/or at least one resource block that the terminal device needs to use. The second information may be time domain position information and/or frequency domain position information, and may be sequence number(s) of resource pool(s) and/or resource block(s).

In a case that the retransmission command indicates resource block(s) used by the terminal device when performing retransmission, the terminal device performs retransmission of data information according to the resource block(s) indicated by the retransmission command. In a case that the retransmission command indicates at least one resource pool used by the terminal device when performing retransmission, the terminal device re-selects at least one resource block in the at least one resource pool to perform transmission of data information. When the retransmission command does not indicate the resource pool(s) and the resource block(s) when the terminal device performs retransmission, the terminal device re-selects at least one resource block in the at least one resource pool to perform retransmission of the data information, and the re-selected at least one resource block in the at least one resource pool is randomly selected by the terminal device.

In summary, in the method provided by the embodiment of the present disclosure, retransmission is performed after the terminal device receives the retransmission command. The retransmission command may indicate at least one resource pool and/or at least one resource block that needs to be used, and the retransmission command may not indicate any retransmission information, and the terminal device may randomly select the resource block(s) to perform retransmission by itself. The method can ensure that the network device successfully receives each piece of data information that needs to be transmitted, thus improving the reliability of transmission of data information.

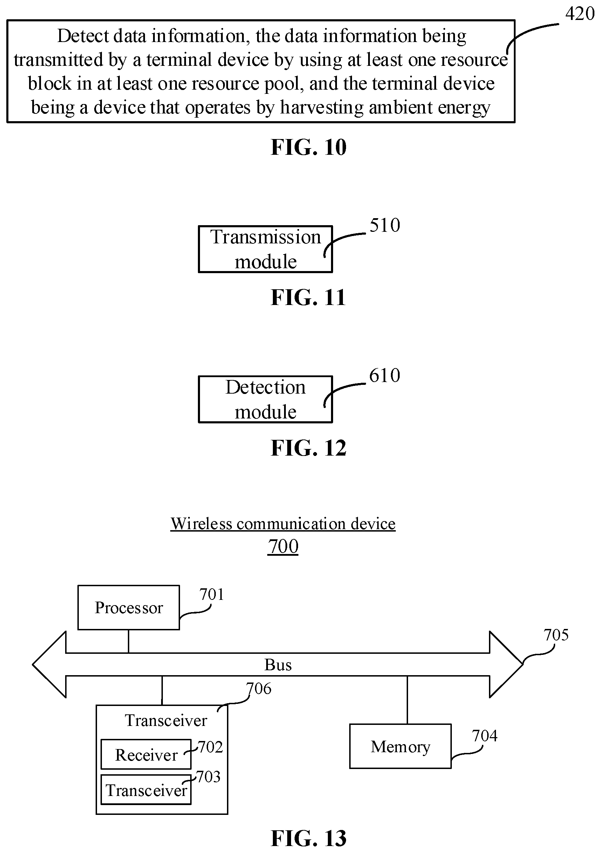

FIG. 10 illustrates a flowchart of a method for transmitting data information according to an exemplary embodiment of the present disclosure. The method is performed by a network device. The network device may be the network device illustrated in FIG. 6. The method includes the following operation.

In operation 420, data information is detected, the data information is transmitted by a terminal device using at least one resource block in at least one resource pool, and the terminal device is a device that operates by harvesting ambient energy.

In some embodiments, the at least one resource pool is pre-configured or pre-agreed. The at least one resource pool is grouped according to at least one of: data type(s) that resource block(s) in the resource pool(s) can carry, resource block size(s), or interval(s) between resource blocks (which may also be referred to as period(s) of the resource blocks).

As illustrated in FIG. 8, the resource pool(s) is grouped according to at least one of data type(s) that the resource block(s) can carry, resource block size(s), or interval(s) between the resource blocks (which may also be referred to as period(s) of the resource block). For example, if the data types that the resource block set 1 to the resource block set 3 can carry are data type A, and the data types that the resource block set 4 and the resource block set 5 can carry are data type B, the resource block set 1 to the resource block set 3 may be grouped into a resource pool, and the resource block set 4 and the resource block set 5 may be grouped into another resource pool. Alternatively, when grouping according to the resource block size, since the resource block sizes of the resource block set 1, the resource block set 4, and the resource block set 5 are the same, the resource block set 1, the resource block set 4, and the resource block set 5 may be grouped into a resource pool, the resource block set 2 may be grouped into a resource pool, and the resource block set 3 may be grouped into a resource pool. When grouping according to the interval between resource blocks, the resource block set 1 to the resource block set 3 having an interval 1 between resource blocks may be grouped into a resource pool, the resource block set 4 having an interval 2 between resource blocks may be grouped into a resource pool, and the resource block set 5 having an interval 3 between resource blocks may be grouped into a resource pool.

In addition, the above-mentioned methods for grouping the resource pool(s) may be implemented in combination, for example, the resource pool(s) is grouped according to the data type(s) that the resource block(s) can carry and the interval(s) between the resource block(s); or the resource pool(s) is grouped according to the resource block size(s) and the interval(s) between the resource blocks; or the resource pool(s) is grouped according to data type(s) that the resource block(s) can carry and resource block size(s); or the resource pool(s) is grouped according to the data type(s) that the resource block(s) can carry, the resource block size(s), and the interval(s) between the resource blocks. For example, the data types that the resource block set 1 to the resource block set 3 are the data type A, and the data type that the resource block set 4 and the resource block set 5 are the data type B. When the resource pools are grouped according to the data types that the resource blocks can carry and the intervals between the resource blocks, the data types are used as the main grouping basis and the intervals between the resource blocks are used as the secondary grouping basis, the resource block set 1 to the resource block set 3 may be grouped into a resource pool, the resource blocks in the resource pool can carry the data type A and the intervals between the resource blocks in the resource pool are less. The resource pool set 4 and the resource block set 5 are grouped into a resource pool, the resource blocks in the resource pool can carry the data type B and the intervals between the resource blocks in the resource pool is greater. Alternatively, when the resource pools are grouped according to the data types that the resource blocks can carry and the intervals between the resource blocks, the intervals between the resource blocks are used as the main grouping basis and the data types are used as the secondary grouping basis, the resource block set 1 to the resource block set 3 may be grouped into a resource pool, the resource block set 4 may be grouped into a resource pool, and the resource block set 5 may be grouped into a resource pool. In FIG. 8, "interval" referring to a portion between the time domain end position of a preceding resource block and the time domain start position of an immediately following resource block is taken as an example, but it is not excluded that "interval" refers to a portion between the time domain start position of a preceding resource block and the time domain start position of an immediately following resource block, or a portion between the time domain end position of a preceding resource block and the time domain end position of an immediately following resource block.

It should be noted that the embodiments of the present disclosure do not limit the measurement unit of the resource block size(s), the measurement unit of the interval(s) between the resource blocks, and the like. For example, the resource block size(s) may be defined according to the time domain resource and/or the frequency domain resource, and the interval(s) between the resource blocks may be defined according to the time domain interval and/or the frequency domain interval. The unit of the resource block size(s) and the unit of the interval between the resource blocks may be a time domain unit such as a symbol, a subframe, a frame, a microsecond, a millisecond, a second, or the like. The unit of the resource block size(s) and the unit of the interval between the resource blocks may be a frequency domain unit such as a subcarrier, a carrier, a Physical Resource Block (PRB), hertz, or the like. The resource block size may be represented by the data volume that the resource block can carry, that is, the unit of the resource block size may be a unit of data volume, such as bit, Byte, KB, MB, or the like.

In some embodiments, the transmission information corresponding to the resource block(s) carrying the data information is determined based on at least one of: a time domain resource when receiving the control signaling, a command type indicated by the control signaling, data type, data volume, an energy storage state of the terminal device, a device identifier of the terminal device, or a resource utilization rate of each of the at least one resource pool. The transmission information is information for determining at least one resource pool and/or at least one resource block.

In some embodiments, the transmission information includes at least one piece of following information: resource pool identifier(s) of the at least one resource pool; position information of at least one resource pool, the position information including at least one of time domain position information or frequency domain position information; resource block identifier(s) of at least one resource block; position information of at least one resource block, the position information including at least one of time domain position information or frequency domain position information; or period(s) of at least one resource block. The time domain position information includes at least one of a time domain start point, a time domain end point, or a time domain length, and the frequency domain position information includes at least one of a frequency domain start point, a frequency domain end point, or a frequency domain length.

In some embodiments, the network device sends a resource utilization rate of each of the at least one resource pool to the terminal device. The network device periodically issues a resource utilization rate of each of the at least one resource pool. The resource utilization rate is calculated based on periodically occupied resource(s) in the resource pool, aperiodically occupied resource(s) allocated by the network device, and usable resource(s) in the resource pool. The resource utilization rate is used to indicate the usage case of the resource pool within a certain time domain resource.

In some embodiments, at least one resource pool is configured during a registration process; or, the at least one resource pool is configured in a wake-up signal; or, the at least one resource pool is configured in control signaling.

For example, at least one resource pool belongs to a resource pool pre-generated by a network device, and the network device reserves one or more sets of resource blocks according to a command type, a data type and a data volume to constitute one or more resource pools. In the registration process of the terminal device, the network device configures at least one of the pre-generated one or more resource pools for use by the terminal device; or when the network device needs to wake up the terminal device to transmit data information, at least one of the pre-generated one or more resource pools is configured for use by the terminal device, and the at least one resource pool may be any several resource pools among the pre-generated one or more resource pools, or may be at least one resource pool selected by the network device for the terminal device according to the data type and/or data volume expected to be transmitted by the terminal device and matched with the data type and/or data volume; or, when the network device instructs the terminal device to transmit data information by using the control signaling, at least one of the pre-generated one or more resource pools is configured for use by the terminal device, and the at least one resource pool may be any several resource pools among the pre-generated one or more resource pools, or may be at least one resource pool selected by the network device for the terminal device by using at least one of a command type, a data type, and a data volume indicated by the control signaling and matched with the above information indicated by the control signaling.

In some embodiments, the at least one resource block in the at least one resource pool may be understood as at least one resource block in a set of resource blocks configured by the network device, and may also be understood as at least one resource block configured by the network device. The at least one resource block is located within the at least one resource pool.

In some embodiments, the network device determines whether data information is carried on the resource block(s) by detecting energy (energies) on the resource block(s). For example, the energy of a resource block that does not carry data information is about 100 dB, and the energy of a resource block that carries data information is more than 120 dB.

In summary, in the method provided by the embodiment of the present disclosure, the network device detects data information on each resource block in each resource pool, it can be ensured that the network device successfully receives the data information transmitted by the terminal device, and that the data transmission process can be successfully completed.

In some embodiments, resource block(s) carrying data information are determined in two manners, and these two determination manners have been shown above and will not be described again here.

In the determination manner 1, the data information is transmitted by the terminal device by using at least one resource block in the at least one resource pool based on an instruction of control signaling.

In an alternative embodiment based on FIG. 10, the method further includes operation 410, and the operation 420 may be implemented to be the operation 421.

In the operation 410, control signaling is sent to the terminal device. The control signaling is used for instructing the terminal device to perform transmission of data information by using at least one resource pool and/or at least one resource block.

In some embodiments, the information indicated by the control signaling includes at least one of a command type, a type of data that needs to be transmitted, data volume that needs to be transmitted, or a device identifier of the terminal device. The device identifier of the terminal device is a physical identifier or a logical identifier, the physical identifier is an identifier uniquely indicating the terminal device, the logical identifier is an identifier uniquely indicating the terminal device within a range covered by the network device, and the length of the logical identifier is generally shorter than the physical identifier.

Alternatively, there is a correspondence among the command type, the type of data that needs to be transmitted, and the data volume that needs to be transmitted. For example, the state query command corresponds to data type A; or the state query command corresponds to the data type A, and the corresponding data volume is 8 bits; or, the sensor data reporting command corresponds to data volumes of 16 bits, 32 bits and 64 bits; or, the sensor data reporting command corresponds to the data type B; or data type B corresponds to data volumes of 16 bits, 32 bits, and 64 bits.

In the operation 421, data information is detected on the at least one resource pool and/or the at least one resource block indicated by the control signaling, and the data information is transmitted by the terminal device by using the at least one resource pool and/or the at least one resource block based on the instruction of the control signaling.

In some embodiments, the transmission information corresponding to the resource block(s) carrying the data information is determined based on at least one of: a time domain resource when receiving the control signaling, a command type indicated by the control signaling, a type of data, that needs to be transmitted, indicated by the control signaling, data volume, that needs to be transmitted, indicated by the control signaling, or a device identifier of the terminal device.

In some embodiments, the control signaling is used to instruct the terminal device to perform transmission of data information by using at least one resource pool, and the network device detects the data information on each resource block in the at least one resource pool indicated by the control signaling. Alternatively, the network device configures at least one resource pool for the terminal device by using the control signaling, and detects data information on each resource block in the at least one resource pool indicated by the control signaling.

In some embodiments, the control signaling is used to instruct the terminal device to perform transmission of data information by using at least one resource block in the at least one resource pool, and the data information is detected on at least one resource block in the at least one resource pool indicated by the control signaling. Alternatively, the control signaling is used to instruct the terminal device to perform transmission of data information by using at least one resource pool, and the data information is detected on each resource block in the at least one resource pool indicated by the control signaling. Alternatively, the control signaling is used to instruct the terminal device to perform transmission of data information by using at least one resource block, and data information is detected on at least one resource block in the first target resource pool indicated by the control signaling. The first target resource pool is a resource pool including at least one resource block.

In summary, in the method provided by the embodiment of the present disclosure, the network device directly indicates the resource block(s) that needs to be used for data transmission for the terminal device, and the network device is responsible for regulating the use of the resource block(s), which can greatly reduce the probability of data collision. Moreover, the network device can also store which resource block(s) will be used for data transmission, and can directly detect data information from the resource block(s), thus improving the data receiving efficiency of the network device.

In the determination manner 2, the data information is transmitted by the at least one resource block in at least one resource pool selected by the terminal device.

In some embodiments, when the at least one resource pool and the at least one resource block are both selected by the terminal device, the at least one resource pool and the at least one resource block are both unknown to the network device, and the network device detects data information on each resource block in each resource pool.

In some embodiments, the data information is transmitted by the terminal device selecting at least one resource block in the at least one resource pool in a case that a wake-up signal or control signaling is received or a trigger event is present. In a case that the at least one resource pool used by the terminal device is at least one resource pool known to the network device and the at least one resource block used by the terminal device is resource block(s) unknown to the network device, data information is detected on each resource block in the at least one resource pool known to the network device; and/or, in a case that the at least one resource block used by the terminal device is the at least one resource block known to the network device, data information is detected on the at least one resource block known to the network device in the second target resource pool, and the second target resource pool is a resource pool including the at least one resource block known to the network device. It should be noted that "known" means that the network device knows the selection information of the terminal device for at least one resource pool and/or at least one resource block, and "unknown" means that the network device does not know the selection information of the terminal device for the at least one resource pool and/or the at least one resource block.

In some embodiments, the network device sends a wake-up signal or control signaling to the terminal device, and the wake-up signal is used to instruct the terminal device to select at least one resource pool and/or at least one resource block to perform transmission of data information. Alternatively, the wake-up signal includes control signaling.

In some embodiments, the transmission information corresponding to the resource block(s) carrying the data information is determined based on at least one of the following: a resource utilization rate of each of the at least one resource pool, a command type indicated by control signaling, a data type, a data volume, an energy storage state of the terminal device, or a device identifier of the terminal device. The data type and the data volume are information indicated by the control signaling; or, the data type and the data volume are acquired by the terminal device according to the data information that needs to be transmitted. The device identifier of the terminal device is information indicated by the control signaling; or information stored by the terminal device itself.

In some embodiments, the network device sends a resource utilization rate of each of the at least one resource pool to the terminal device. The network device periodically issues a resource utilization rate of each of the at least one resource pool. The resource utilization rate is calculated based on periodically occupied resource(s) in the resource pool, aperiodically occupied resource(s) allocated by the network device, and usable resource(s) in the resource pool. The resource utilization rate is used to indicate the usage case of the resource pool within a certain time domain resource.

In some embodiments, the at least one resource pool and/or the at least one resource block carrying the data information is determined by the terminal device based on the first information, and the first information is calculated according to the device identifier of the terminal device. Alternatively, the first information may be time domain position information and/or frequency domain position information, or the first information may be sequence number(s) of resource pool(s) and/or resource block(s).

In some embodiments, the first information is obtained by mapping based on all bits or a part of bits of a binary sequence. The binary sequence is obtained by calculating based on the device identifier of the terminal device.

In summary, the method provided by the embodiment of the present disclosure can effectively reduce the data interaction between the terminal device and the network device in the data transmission process by selecting at least one resource block in at least one resource pool by the terminal device, thereby saving the energy consumption of the terminal device and improving the resource utilization rate. When the terminal device makes the selection, the resource block(s) can be selected by the resource utilization rate of each of the at least one resource pool, the first information calculated based on the device identifier of the terminal device, and the like, and the probability of data collision can be reduced when multiple terminal devices have data transmission requirements at the same time. In addition, the instruction of the network device and the selection of the terminal device can be combined, thereby improving the selection efficiency of the terminal device and improving the data transmission efficiency. Because the network device can be regulated as a whole, the probability of data collision can also be reduced to a certain extent.

In an alternative embodiment based on FIG. 10, the method further includes operations 430 and 440.

In the operation 430, a reception situation of data information is monitored.

In some embodiments, the network device determines the caring situation of data information on the resource block(s) according to the energy on each resource block. For example, the energy of a resource block that does not carry data information is about 100 dB, and the energy of a resource block that carries data information is more than 120 dB. If the network device can obtain data information from the resource block with energy greater than 120dB, it is represented that the data information is correctly received. If the network device cannot obtain data information from a resource block with energy greater than 120 dB, it is represented that the data information cannot be correctly received, and a data collision may occur, that is, at least two terminal devices perform transmission of data information using the same resource block.

In the operation 440, when a data collision occurs in the resource block, a retransmission command is sent to the first terminal devices, and the retransmission command is used to instruct the first terminal devices to reperform the transmission of data information.

In some embodiments, the first terminal devices are at least two terminal devices in which a data collision occurs, that is, the network device can identify which terminal devices have a data collision in the resource block; or, the first terminal devices are terminal device predicted by the network device to use the resource pool in which the resource block is located, that is, the network device can speculate which terminal devices will have data collision in the resource block based on configuration information stored in the network device, control signaling or wake-up signal sent by the network device, and the like; or, the first terminal devices are all the terminal devices that use the resource pool in which the resource block is located, that is, all the terminal devices configured with the resource pool are retransmitted.

In some embodiments, the retransmission command is used to instruct each of the first terminal devices to perform transmission of data information using at least one resource pool and/or at least one resource block; or, the retransmission command is used to instruct each of the first terminal devices to reselect at least one resource pool and/or at least one resource block to perform transmission of data information.

In summary, the method provided by the embodiment of the present disclosure shows a judgment of a data collision by the network device and a processing method after a data collision occurs, and the method can ensure that the network device successfully receives respective pieces of data information that need to be transmitted, thereby improving the reliability of data transmission.

FIG. 11 illustrates a block diagram of a structure of an apparatus for transmitting data information according to an exemplary embodiment of the present disclosure. The apparatus is an apparatus that operates by harvesting ambient energy. The apparatus includes a transmission module 510.

The transmission module 510 is configured to perform transmission of data information by using at least one resource block in at least one resource pool.

In some embodiments, the at least one resource pool is pre-configured or pre-agreed. The at least one resource pool is grouped according to at least one of: data type(s) that resource block(s) in the resource pool(s) can carry, resource block size(s), or interval(s) between resource blocks (which may also be referred to as period(s) of the resource blocks).

As illustrated in FIG. 8, if the data types that the resource block set 1 to the resource block set 3 can carry are data type A, and the data types that the resource block set 4 and the resource block set 5 can carry are data type B, the resource block set 1 to the resource block set 3 may be grouped into a resource pool, and the resource block set 4 and the resource block set 5 may be grouped into another resource pool. Alternatively, when grouping according to the resource block size, since the resource block sizes of the resource block set 1, the resource block set 4, and the resource block set 5 are the same, the resource block set 1, the resource block set 4, and the resource block set 5 may be grouped into a resource pool, the resource block set 2 may be grouped into a resource pool, and the resource block set 3 may be grouped into a resource pool. When grouping according to the interval between resource blocks, the resource block set 1 to the resource block set 3 having an interval 1 between resource blocks may be grouped into a resource pool, the resource block set 4 having an interval 2 between resource blocks may be grouped into a resource pool, and the resource block set 5 having an interval 3 between resource blocks may be grouped into a resource pool.

In addition, the above-mentioned methods for grouping the resource pool(s) may be implemented in combination, for example, the resource pool(s) is grouped according to the data type(s) that the resource block(s) can carry and the interval(s) between the resource block(s); or the resource pool(s) is grouped according to the resource block size(s) and the interval(s) between the resource blocks; or the resource pool(s) is grouped according to data type(s) that the resource block(s) can carry and resource block size(s); or the resource pool(s) is grouped according to the data type(s) that the resource block(s) can carry, the resource block size(s), and the interval(s) between the resource blocks. For example, the data types that the resource block set 1 to the resource block set 3 are the data type A, and the data type that the resource block set 4 and the resource block set 5 are the data type B. When the resource pools are grouped according to the data types that the resource blocks can carry and the intervals between the resource blocks, the data types are used as the main grouping basis and the intervals between the resource blocks are used as the secondary grouping basis, the resource block set 1 to the resource block set 3 may be grouped into a resource pool, the resource blocks in the resource pool can carry the data type A and the intervals between the resource blocks in the resource pool are less. The resource pool set 4 and the resource block set 5 are grouped into a resource pool, the resource blocks in the resource pool can carry the data type B and the intervals between the resource blocks in the resource pool is greater. Alternatively, when the resource pools are grouped according to the data types that the resource blocks can carry and the intervals between the resource blocks, the intervals between the resource blocks are used as the main grouping basis and the data types are used as the secondary grouping basis, the resource block set 1 to the resource block set 3 may be grouped into a resource pool, the resource block set 4 may be grouped into a resource pool, and the resource block set 5 may be grouped into a resource pool. In FIG. 8, "interval" referring to a portion between the time domain end position of a preceding resource block and the time domain start position of an immediately following resource block is taken as an example, but it is not excluded that "interval" refers to a portion between the time domain start position of a preceding resource block and the time domain start position of an immediately following resource block, or a portion between the time domain end position of a preceding resource block and the time domain end position of an immediately following resource block.

It should be noted that the embodiments of the present disclosure do not limit the measurement unit of the resource block size(s), the measurement unit of the interval(s) between the resource blocks, and the like. For example, the resource block size(s) may be defined according to the time domain resource and/or the frequency domain resource, and the interval(s) between the resource blocks may be defined according to the time domain interval and/or the frequency domain interval. The unit of the resource block size(s) and the unit of the interval between the resource blocks may be a time domain unit such as a symbol, a subframe, a frame, a microsecond, a millisecond, a second, or the like. The unit of the resource block size(s) and the unit of the interval between the resource blocks may be a frequency domain unit such as a subcarrier, a carrier, a Physical Resource Block (PRB), hertz, or the like. The resource block size may be represented by the data volume that the resource block can carry, that is, the unit of the resource block size may be a unit of data volume, such as bit, Byte, KB, MB, or the like.

In some embodiments, transmission of data information is performed by using at least one resource block in the at least one resource pool according to transmission information, and the transmission information is information for determining the at least one resource pool and/or the at least one resource block. The transmission information is determined based on at least one of following: a time domain resource when receiving the control signaling, a command type indicated by the control signaling, data type, data volume, an energy storage state of the terminal device, a device identifier of the terminal device, or a resource utilization rate of each of the at least one resource pool.

In some embodiments, the transmission information includes at least one piece of following information: resource pool identifier(s) of the at least one resource pool; position information of at least one resource pool, the position information including at least one of time domain position information or frequency domain position information; resource block identifier(s) of at least one resource block; position information of at least one resource block, the position information including at least one of time domain position information or frequency domain position information; or period(s) of at least one resource block. The time domain position information includes at least one of a time domain start point, a time domain end point, or a time domain length, and the frequency domain position information includes at least one of a frequency domain start point, a frequency domain end point, or a frequency domain length.

In some embodiments, the apparatus further includes a receiving module.

The first receiving module is configured to receive a resource utilization rate of each of the at least one resource pool sent by the network device. The terminal device periodically receives a resource utilization rate of each of the at least one resource pool. The resource utilization rate is calculated based on periodically occupied resource(s) in the resource pool, aperiodically occupied resource(s) allocated by the network device, and usable resource(s) in the resource pool. The resource utilization rate is used to indicate the usage case of the resource pool within a certain time domain resource.

For example, time-domain position information of at least one resource pool and/or time-domain position information of at least one resource block to be used by the terminal device when performing transmission of data information is determined according to a time-domain resource when receiving control signaling; or a period of at least one resource block to be used by the terminal device when performing transmission of data information is determined according to the command type; or the range information of at least one resource pool and/or the range information of at least one resource block to be used by the terminal device when performing the transmission of data information is determined according to the data volume, or the like.

In some embodiments, at least one resource pool is configured during a registration process; or, the at least one resource pool is configured in a wake-up signal; or, the at least one resource pool is configured in control signaling.

For example, at least one resource pool belongs to a resource pool pre-generated by a network device, and the network device reserves one or more sets of resource blocks according to a command type, a data type and a data volume to constitute one or more resource pools. In the registration process of the terminal device, the network device configures at least one of the pre-generated one or more resource pools for use by the terminal device; or when the network device needs to wake up the terminal device to transmit data information, at least one of the pre-generated one or more resource pools is configured for use by the terminal device, and the at least one resource pool may be any several resource pools among the pre-generated one or more resource pools, or may be at least one resource pool selected by the network device for the terminal device according to the data type and/or data volume expected to be transmitted by the terminal device and matched with the data type and/or data volume; or, when the network device instructs the terminal device to transmit data information by using the control signaling, at least one of the pre-generated one or more resource pools is configured for use by the terminal device, and the at least one resource pool may be any several resource pools among the pre-generated one or more resource pools, or may be at least one resource pool selected by the network device for the terminal device by using at least one of a command type, a data type, and a data volume indicated by the control signaling and matched with the above information indicated by the control signaling.

In some embodiments, the at least one resource block in the at least one resource pool may be understood as at least one resource block in a set of resource blocks configured by the network device, and may also be understood as at least one resource block configured by the network device. The at least one resource block is located within the at least one resource pool.

In summary, the apparatus provided by the embodiment of the present disclosure supports a method for transmitting data information of a terminal device that operates by harvesting ambient power, and causes the terminal device to perform transmission of data information by using resource block(s) in a pre-configured resource pool, which can not only meet the data transmission requirements of the terminal device, but also can transmit without receiving dynamically scheduled control signaling or only receiving a few bits of control signaling compared with the traditional process in which the terminal device requests to obtain resources and then performs data transmission, thus saving the energy consumption of the terminal device and facilitating adaptation of different types of terminal devices that operate by harvesting ambient energy. In addition, the terminal device can also determine at least one transmission pool and/or at least one transmission block to be specifically used based on the transmission information, and the determination factors of the transmission information include information related to data transmission and the self-state of the terminal device, that is, the at least one resource pool and/or at least one resource block to be used is determined based on the information related to data transmission and the self-state of the terminal device, and different influencing factors when the terminal device performs data transmission are shown.

The at least one resource pool and/or the at least one resource block used by the terminal device is determined based on at least one of the following two manners:

Determination manner 1: determining based on the information indicated by the control signaling sent by the network device;

Determination manner 2: determining by the terminal device.

Hereinafter, the above two determination manners will be described in sequence, but the order in which the two determination manners are introduced does not limit the advantages and disadvantages of the two implementation manners.

**Determination manner 1: determining based on information indicated by control signaling sent by the network device.**

In some embodiments, the apparatus further includes the second receiving module.

The second receiving module is configured to receive control signaling. The control signaling is used for instructing the terminal device to perform transmission of data information by using at least one resource pool and/or at least one resource block.

In some embodiments, the information indicated by the control signaling includes at least one of a command type, a type of data that needs to be transmitted, data volume that needs to be transmitted, or a device identifier of the terminal device. The device identifier of the terminal device is a physical identifier or a logical identifier, the physical identifier is an identifier uniquely indicating the terminal device, the logical identifier is an identifier uniquely indicating the terminal device within a range covered by the network device, and the length of the logical identifier is generally shorter than the physical identifier.

Alternatively, there is a correspondence among the command type, the type of data that needs to be transmitted, and the data volume that needs to be transmitted. For example, the state query command corresponds to data type A; or the state query command corresponds to the data type A, and the corresponding data volume is 8 bits; or, the sensor data reporting command corresponds to data volumes of 16 bits, 32 bits and 64 bits; or, the sensor data reporting command corresponds to the data type B; or data type B corresponds to data volumes of 16 bits, 32 bits, and 64 bits.

In some embodiments, the transmission module 510 is further configured to perform transmission of data information by using at least one resource pool and/or at least one resource block based on an instruction of control signaling.

In some embodiments, transmission of data information is performed by using at least one resource pool and/or at least one resource block according to transmission information. The transmission information is information for determining at least one resource pool and/or at least one resource block. The transmission information is determined based on at least one of: a time domain resource when receiving the control signaling, a command type indicated by the control signaling, a type of data, that needs to be transmitted, indicated by the control signaling, data volume, that needs to be transmitted, indicated by the control signaling, or a device identifier of the terminal device.

As illustrated in FIG. 9, there are the first resource pool 10 and the second resource pool 20, and the first resource pool includes a resource block seₜ1 to a resource block set 3, a total of three resource block sets, the maximum data volume that can be carried by the resource blocks in the resource block set 1 is 8 bits, the maximum data volume that can be carried by the resource blocks in the resource block set 2 is 16 bits, and the maximum data volume that can be carried by the resource blocks in the resource block set 3 is 32 bits. The intervals between the resource blocks in the resource block set 1 to the resource block set 3 are the same, and are all intervals 1. The data type that can be carried by the resource blocks in the resource block sets 1 to 3 is the data type A. The second resource pool 20 includes a resource block set 4 and a resource block set 5, and the maximum data volume that can be carried by the resource blocks in the resource block set 4 and the resource block set 5 is 8 bits. The interval between the resource blocks in the resource block set 4 is interval 2, and the interval between the resource blocks in the resource block set 5 is interval 3. The data type that can be carried by the resource blocks in the resource block set 4 and the resource block set 5 is the data type B. The information indicated by the control signaling includes: the data type that needs to be transmitted is the data type A, and the data volume that needs to be transmitted is 13 bits. The terminal device performs transmission of data information by using the resource block 22 in the first resource pool 10 after receiving the control signaling based on the instruction of the control signaling. The time domain resource corresponding to the resource block 22 differs from the time domain resource 60 when receiving the control signaling by the first time domain resource 61. The first time domain resource 61 may also be referred to as a time offset, which may be represented as t_{ul-offset}. The first resource pool 10 is a resource pool that matches the data type A, that is, at least one resource block in the first resource pool can carry data information of the data type A. The resource block size in the first resource pool 10 includes 8 bits, 16 bits and 32 bits, and the resource block 22 belongs to the resource block set 2, and the resource block size corresponding to the resource block 22 is 16 bits. Alternatively, the information indicated by the control signaling includes: the data type that needs to be transmitted is the data type A, and the data volume that needs to be transmitted is 13 bits. The terminal device performs transmission of data information by using the resource block 21 in the first resource pool 10 after receiving the control signaling based on the instruction of the control signaling. The resource block 21 is the first resource block that supports the terminal device to complete the transmission of data information after the terminal device receives the control signaling. In this scenario, the stored energy of the terminal device itself is insufficient to transmit by using the resource block 31, or the terminal device expects to perform the transmission of data information by using the least energy. Alternatively, the information indicated by the control signaling includes: the data type that needs to be transmitted is the data type A, and the data volume that needs to be transmitted is 13 bits. The terminal device performs transmission of data information by using the resource block 31 in the first resource pool 10 after receiving the control signaling based on the instruction of the control signaling. The resource block 31 is the first resource block that supports the terminal device to complete the transmission of data information after the terminal device receives the control signaling. In this scenario, the stored energy of the terminal device itself is relatively sufficient, and the terminal device does not care about the excess energy consumption caused by using the larger resource block.

In summary, in the apparatus provided by the embodiment of the present disclosure, the terminal device uses at least one resource block in at least one resource pool to perform transmission of data information according to the information indicated by the control signaling sent by the network device, which can not only meet the data transmission requirements of the terminal device, but also can transmit without receiving dynamically scheduled control signaling or only receiving a few bits of control signaling compared with the traditional process in which the terminal device requests to obtain resources and then performs data transmission, thus saving the energy consumption of the terminal device and facilitating adaptation of different types of terminal devices that operate by harvesting ambient energy. In addition, since the resource block that is used by the terminal device to perform transmission of data information is instructed by the network device, the probability of data collision caused by different terminal devices using the same resource block can be greatly reduced.

**Determination manner 2: Determining by the terminal device.**

In some embodiments, the transmission module 510 is further configured to select at least one resource pool and/or at least one resource block to perform transmission of data information.

The terminal device actively selects at least one resource pool and/or at least one resource block to perform transmission of data information. The at least one resource pool and/or at least one resource block is actively selected by the terminal device. For example, when the terminal device is configured with only one resource pool, the terminal device only needs to select at least one resource block in the resource pool to perform transmission of data information; or when the data type that needs to be transmitted by the terminal device corresponds to only one resource pool, the terminal device selects at least one resource block in the resource pool to perform transmission of data information.

In some embodiments, in a case that the terminal device receives different trigger signals, the terminal device selects at least one resource pool and/or at least one resource block to perform transmission of data information. The trigger signal includes at least one of a wake-up signal, control signaling, or a trigger event.

In some embodiments, the transmission module 510 is further configured to select at least one resource pool and/or at least one resource block to perform transmission of data information in a case that the terminal device receives a wake-up signal or control signaling or a trigger event is present. Alternatively, the wake-up signal includes control signaling.

In some embodiments, transmission of data information is performed by using at least one resource pool and/or at least one resource block according to transmission information. The transmission information is information for determining at least one resource pool and/or at least one resource block. The transmission information is determined based on at least one of: a resource utilization rate of each of the at least one resource pool, a command type indicated by the control signaling, a data type, a data volume, an energy storage state of the terminal device, or a device identifier of the terminal device. The data type and the data volume are information indicated by the control signaling; or, the data type and the data volume are acquired by the terminal device according to the data information that needs to be transmitted by the terminal device. The device identifier of the terminal device is information indicated by the control signaling; or information stored by the terminal device itself.

In some embodiments, the terminal device receives a resource utilization rate of each of the at least one resource pool sent by the network device. The terminal device periodically receives a resource utilization rate of each of the at least one resource pool. The resource utilization rate is calculated based on periodically occupied resource(s) in the resource pool, aperiodically occupied resource(s) allocated by the network device, and usable resource(s) in the resource pool. The resource utilization rate is used to indicate the usage case of the resource pool within a certain time domain resource.

For example, in a case that the terminal device receives the wake-up signal, the terminal device selects at least one resource pool and/or at least one resource block to perform transmission of data information. The wake-up signal carries control signaling. The control signaling indicates at least one resource pool that can be used by the terminal device for transmission of data information this time and a command type. The terminal device acquires a data type and a data volume that need to be transmitted. Further, the terminal device selects one resource pool among at least one resource pool according to the data type and the data amount that needs to be transmitted. For example, preliminary screening is performed according to the data type that needs to be transmitted to obtain at least one resource pool after preliminary screening, and a resource pool whose resource block size is closest to the data size among the at least one resource pool after preliminary screening is selected according to the data volume. After the resource pool is determined, at least one resource block in the resource pool may be randomly selected to perform transmission of data information, at least one resource block in the resource pool may be selected to perform transmission of data information according to the data volume, or at least one resource block in the resource pool may be selected to perform transmission of data information according to the energy storage state of the terminal device.

For example, when the wake-up signal is received, the energy storage state of the terminal device is not sufficient to support the terminal device to perform transmission of data information using any resource block, and therefore, the terminal device continues to harvest energy until the energy stored by the terminal device is sufficient for the terminal device to perform transmission of data information, and then selects the first resource block that supports transmission of data information this time to perform transmission of data information; or, the terminal device needs to periodically perform transmission of data information, and according to the energy storage state of the terminal device, when the energy storage state of the terminal device is low and/or the speed of energy harvesting is slow, the terminal device performs transmission of data information according to a long transmission period. When the energy storage state of the terminal device is high and/or the speed of energy harvesting is fast, the terminal device performs transmission of data information in a short transmission period.

Alternatively, in order to avoid data collision as much as possible, first information is calculated according to the device identifier of the terminal device, and at least one resource pool and/or at least one resource block used by the terminal device is determined based on the first information. The first information may be time domain position information and/or frequency domain position information, and may be a sequence number of a resource pool and/or a resource block.

For example, a binary sequence of fixed length, such as an 8-bit binary sequence, is generated according to the device identifier of the terminal device. The first information is obtained by mapping all bits or part bits of the binary sequence, for example, the first 4 bits of the 8-bit binary sequence are used to represent frequency domain position information, and the last 4 bits are used to represent time domain position information, and the first information is time domain position information and/or frequency domain position information; or the first 2 bits are used to represent time domain position information, the last 6 bits are used to represent frequency domain position information, and the first information is time domain position information and/or frequency domain position information; or, the first 4 bits are used to represent the sequence number of the resource pool, the last 4 bits are used to represent the sequence number of the resource block, and the first information is the sequence number of the resource pool and/or the resource block; or the first 2 bits are used to represent the sequence number of the resource pool, the last 6 bits are used to represent the sequence number of the resource block, and the first information is the sequence number of the resource pool and/or the resource block. This is not limited in the embodiments of the present disclosure.

In some embodiments, a binary sequence of fixed length is obtained by performing modulo-2 division on the device identifier of the terminal device using a generator polynomial, and the fixed length is the highest bit index of the generative polynomial. For example, the generative polynomial is x⁷+ x³+ x +1, and the generative polynomial may be represented to be 10001011. If the device identifier of the terminal device is 110010011, the calculated binary sequence is 1011101, and if the fixed length is 8 bits, the final binary sequence of fixed length is 01011101. For the above-mentioned specific operations, reference may be made to the process of obtaining a check code by generative polynomial during CRC check.

In some embodiments, the terminal device selects at least one resource pool and/or at least one resource block to perform transmission of data information in the presence of a trigger event. The trigger event is, such as, sensor alarms, timer timeouts, terminal device failures, etc. In this case, there is generally no information indicated by the control signaling. The terminal device can firstly select at least one resource pool whose resource utilization rate is lower than the first threshold according to the resource utilization rate of each of the at least one resource pool, and the probability of data collision can be effectively reduce by this method, and then a resource pool whose resource block size is closest to the data size is selected from the above resource pool(s), and finally the first information is calculated according to the device identifier of the terminal device, and at least one resource block in the resource pool is selected according to the first information to perform transmission of data information.

In summary, the apparatus provided by the embodiment of the present disclosure can effectively reduce the data interaction between the terminal device and the network device in the data transmission process by selecting at least one resource block in at least one resource pool by the terminal device, thereby saving the energy consumption of the terminal device and improving the resource utilization rate. In addition, when the terminal device makes the selection, the resource block(s) can be selected by the resource utilization rate of each of the at least one resource pool, the first information calculated based on the device identifier of the terminal device, and the like, and the probability of data collision can be reduced when multiple terminal devices have data transmission requirements at the same time.

In some embodiments, determination manner 1 and determination manner 2 may be implemented in combination. For example, in a case that there are few terminal devices that need to perform transmission of data information, the determination manner 2 is preferentially used, and in this scenario, the probability of occurrence of data collision is low even if the resource block used is completely selected by the terminal device, so that the operation that the network device instructs the terminal device to perform transmission of data information by control signaling or a wake-up signal is reduced, and the terminal device performs selection as much as possible, so that the possibility of data collision can be kept low and the terminal device can save energy consumption caused by frequent reception of signals. When there are a large number of terminal devices that need to perform the transmission of data information, the determination manner 1 is preferentially used, and the probability of occurrence of data collision is reduced as much as possible by mainly performing adjustment by the network device.

In some embodiments, the transmission information for determining the at least one resource pool and/or the at least one resource block includes at most five types of transmission information. Based on the above two determination manners, there may be three combinations as follows.

Combination 1: Determining all or part of the transmission information by control signaling.

Combination 2: The terminal selects by itself, so as to determine all or part of the transmission information.

Combination 3: The first part of transmission information is determined by the control signaling, and the second part of transmission information is determined by selecting by the terminal, the first part of transmission information and the second part of transmission information are not overlapped, and the first part of transmission information and the second part of transmission information are all or part of the transmission information.

Exemplarily, resource pool identifier(s) of at least one resource pool is determined according to a command type indicated by the control signaling, resource block identifier(s) of at least one resource block is determined according to a type of data and/or data volume that needs to be transmitted indicated by the control signaling; or, the position information of at least one resource pool is determined according to the command type indicated by the control signaling, and the position information of at least one resource block is determined according to the data type and/or data volume that needs to be transmitted indicated by the control signaling; or, period(s) of at least one resource block and resource pool identifier(s) of at least one resource pool are determined according to a command type indicated by the control signaling, and resource block identifier(s) of at least one resource block is determined according to a data type and/or data volume that needs to be transmitted indicated by the control signaling; or, period(s) of at least one resource block and position information of at least one resource pool are determined according to a command type indicated by the control signaling, and position information of at least one resource block is determined according to a data type and/or data volume that needs to be transmitted indicated by the control signaling; or, resource pool identifier(s) of at least one resource pool is determined according to a command type indicated by the control signaling, and resource block identifier(s) of at least one resource block is determined according to a device identifier of the terminal device; or, the position information of at least one resource pool is determined according to the command type indicated by the control signaling, and the position information of at least one resource block is determined according to the device identifier of the terminal device; or, resource pool identifier(s) of at least one resource pool is determined according to the data type and/or data volume that needs to be transmitted indicated by the control signaling, and resource block identifier(s) of at least one resource block is determined according to the device identifier of the terminal device; or, the position information of at least one resource pool is determined according to the data type and/or the data volume that needs to be transmitted indicated by the control signaling, and the position information of at least one resource block is determined according to the device identifier of the terminal device; or, resource pool identifier(s) of at least one resource pool is determined according to a command type indicated by the control signaling, and resource block identifier(s) of at least one resource block is determined according to a time domain resource when receiving the control signaling; or, position information of at least one resource pool is determined according to a command type indicated by the control signaling, and position information of at least one resource block is determined according to a time domain resource when receiving the control signaling; or, resource pool identifier(s) of at least one resource pool is determined according to a data type and/or data volume that needs to be transmitted indicated by the control signaling, and resource block identifier(s) of at least one resource block is determined according to a time domain resource when receiving the control signaling; or, the position information of at least one resource pool is determined according to the data type and/or the data volume that needs to be transmitted indicated by the control signaling, and the position information of at least one resource block is determined according to the time domain resource when receiving the control signaling.

Exemplarily, the terminal device determines resource pool identifier(s) of at least one resource pool according to a resource utilization rate of each of the at least one resource pool, and determines resource block identifier(s) of at least one resource block according to a data type and/or data volume that needs to be transmitted; or, the terminal device determines the position information of at least one resource pool according to the resource utilization rate of each of the at least one resource pool, and determines the position information of at least one resource block according to the data type and/or data volume that needs to be transmitted; or, the terminal device determines period(s) of at least one resource block according to a command type indicated by the control signaling, determines resource pool identifier(s) of at least one resource pool according to a resource utilization rate of each of the at least one resource pool, and determines resource block identifier(s) of at least one resource block according to a data type and/or data volume that needs to be transmitted; or, the terminal device determines period(s) of the at least one resource block according to the command type indicated by the control signaling, determines the position information of the at least one resource pool according to the resource utilization rate of each of the at least one resource pool, and determines the position information of the at least one resource block according to the data type and/or data volume that needs to be transmitted; or, the terminal device determines resource pool identifier(s) of at least one resource pool according to a resource utilization rate of each of the at least one resource pool, and determines resource block identifier(s) of at least one resource block according to an energy storage state of the terminal device; or, the terminal device determines resource pool identifier(s) of at least one resource pool according to a resource utilization rate of each of the at least one resource pool, and determines resource block identifier(s) of at least one resource block according to a device identifier of the terminal device; or, the terminal device determines the position information of at least one resource pool according to the resource utilization rate of each of the at least one resource pool, and determines the position information of at least one resource block according to the energy storage state of the terminal device; or, the terminal device determines the position information of at least one resource pool according to the resource utilization rate of each of the at least one resource pool, and determines the position information of at least one resource block according to the device identifier of the terminal device.

Exemplarily, the resource pool identifier(s) of the at least one resource pool is determined according to the command type indicated by the control signaling, that is, the at least one resource pool is determined based on the control signaling, the terminal device selects at least one resource block from the at least one resource pool determined based on the control signaling according to the data type and/or the data volume that needs to be transmitted, and determines the resource block identifier(s) of the at least one resource block; or, position information of at least one resource pool is determined according to a command type indicated by the control signaling, that is, at least one resource pool is determined based on the control signaling, the terminal device selects at least one resource block from the at least one resource pool determined based on the control signaling according to a data type and/or data volume that needs to be transmitted, and determines position information of the at least one resource block; or, the resource pool identifier(s) of the at least one resource pool and the position information of the partial resource block are determined according to the command type indicated by the control signaling, that is, the at least one resource pool and the partial resource block(s) supporting transmission of the data information are determined based on the control signaling, the terminal device selects at least one resource block from the partial resource blocks of the at least one resource pool determined based on the control signaling according to the data type and/or the data volume that needs to be transmitted, and determines the resource block identifier(s) of the at least one resource block; or, the resource pool identifier(s) of the at least one resource pool and the resource block identifier(s) of the partial resource block(s) are determined according to the command type indicated by the control signaling, that is, the at least one resource pool and the partial resource block(s) supporting transmission of the data information are determined based on the control signaling, the terminal device selects at least one resource block from the partial resource block(s) of the at least one resource pool determined based on the control signaling according to the data type and/or the data volume that needs to be transmitted, and determines the resource block identifier(s) of the at least one resource block; or, the position information of at least one resource pool and the position information of the partial resource block(s) are determined according to the command type indicated by the control signaling, that is, the at least one resource pool and the partial resource block(s) supporting transmission of the data information are determined based on the control signaling, the terminal device selects at least one resource block from the partial resource block(s) of the at least one resource pool determined based on the control signaling according to the data type and/or the data volume that needs to be transmitted, and determines the position information of the at least one resource block; or, the position information of the at least one resource pool and the resource block identifier(s) of the partial resource block(s) are determined according to the command type indicated by the control signaling, that is, the at least one resource pool and the partial resource block(s) supporting transmission of the data information are determined -based on the control signaling, the terminal device selects at least one resource block from the partial resource block(s) of the at least one resource pool determined based on the control signaling according to the data type and/or the data volume that needs to be transmitted, and determines the position information of the at least one resource block; or, the period(s) of the at least one resource block and the resource pool identifier(s) of the at least one resource pool are determined according to the command type indicated by the control signaling, that is, the at least one resource pool is determined based on the control signaling, the terminal device selects at least one resource block from the at least one resource pool determined based on the control signaling according to the data type and/or the data volume that needs to be transmitted, and determines the resource block identifier(s) of the at least one resource block; or, the period(s) of the at least one resource block and the position information of the at least one resource pool are determined according to the command type indicated by the control signaling, that is, the at least one resource pool is determined based on the control signaling, the terminal device selects at least one resource block from the at least one resource pool determined based on the control signaling according to the data type and/or data volume that needs to be transmitted, and determines the position information of the at least one resource block; or, resource pool identifier(s) of at least one resource pool is determined according to a command type indicated by the control signaling, that is, at least one resource pool is determined based on the control signaling, and the terminal device selects at least one resource block from the at least one resource pool determined based on the control signaling according to the device identifier of the terminal device, and determines resource block identifier(s) of the at least one resource block; or, position information of at least one resource pool is determined according to a command type indicated by the control signaling, that is, at least one resource pool is determined based on the control signaling, and the terminal device selects at least one resource block from the at least one resource pool determined based on the control signaling according to a device identifier of the terminal device, and determines position information of the at least one resource block; or, the resource pool identifier(s) of the at least one resource pool and the position information of the partial resource block(s) are determined according to the command type indicated by the control signaling, that is, the at least one resource pool and the partial resource block(s) supporting transmission of the data information are determined based on the control signaling, the terminal device selects at least one resource block from the partial resource block(s) of the at least one resource pool determined based on the control signaling according to the device identifier of the terminal device, and determines the resource block identifier(s) of the at least one resource block; or, resource pool identifier(s) of at least one resource pool and resource block identifier(s) of partial resource block(s) are determined according to a command type indicated by the control signaling, that is, at least one resource pool and partial resource block(s) supporting transmission of data information are determined based on the control signaling, and the terminal device selects at least one resource block from the partial resource block(s) of at least one resource pool determined based on the control signaling according to the device identifier of the terminal device, and determines resource block identifier(s) of the at least one resource block; or, position information of at least one resource pool and position information of partial resource block(s) are determined according to a command type indicated by the control signaling, that is, at least one resource pool and partial resource block(s) supporting transmission of data information are determined based on the control signaling, the terminal device selects at least one resource block from the partial resource block(s) of the at least one resource pool determined based on the control signaling according to the device identifier of the terminal device, and determines position information of the at least one resource block; or, the position information of at least one resource pool and the resource block identifier(s) of the partial resource block(s) are determined according to the command type indicated by the control signaling, that is, the at least one resource pool and the partial resource block(s) supporting transmission of the data information are determined based on the control signaling, and the terminal device selects at least one resource block from the partial resource block(s) of the at least one resource pool determined based on the control signaling according to the device identifier of the terminal device, and determines the position information of the at least one resource block; or, the period(s) of the at least one resource block and the resource pool identifier(s) of the at least one resource pool are determined according to the command type indicated by the control signaling, that is, the at least one resource pool is determined based on the control signaling, the terminal device selects at least one resource block from the at least one resource pool determined based on the control signaling according to the device identifier of the terminal device, and determines the resource block identifier(s) of the at least one resource block; or, the period(s) of the at least one resource block and the position information of the at least one resource pool are determined according to the command type indicated by the control signaling, that is, the at least one resource pool is determined based on the control signaling, the terminal device selects at least one resource block from the at least one resource pool determined based on the control signaling according to the device identifier of the terminal device, and determines the position information of the at least one resource block; or, resource pool identifier(s) of at least one resource pool is determined according to a command type indicated by the control signaling, that is, at least one resource pool is determined based on the control signaling, the terminal device selects at least one resource block from the at least one resource pool determined based on the control signaling according to an energy storage state of the terminal device, and determines resource block identifier(s) of the at least one resource block; or, position information of at least one resource pool is determined according to a command type indicated by the control signaling, that is, at least one resource pool is determined based on the control signaling, and the terminal device selects at least one resource block from the at least one resource pool determined based on the control signaling according to an energy storage state of the terminal device, and determines position information of the at least one resource block; or, the resource pool identifier(s) of the at least one resource pool and the position information of the partial resource block(s) are determined according to the command type indicated by the control signaling, that is, the at least one resource pool and the partial resource block(s) supporting transmission of the data information are determined based on the control signaling, and at least one resource block is selected from the partial resource block(s) of the at least one resource pool determined based on the control signaling according to the energy storage state of the terminal device, and the resource block identifier(s) of the at least one resource block is determined; or, resource pool identifier(s) of at least one resource pool and resource block identifier(s) of partial resource block(s) are determined according to a command type indicated by the control signaling, that is, at least one resource pool and partial resource block(s) supporting transmission of data information are determined based on the control signaling, the terminal device selects at least one resource block from the partial resource block(s) of at least one resource pool determined based on the control signaling according to an energy storage state of the terminal device, and determines resource block identifier(s) of the at least one resource block; or, position information of at least one resource pool and position information of partial resource block(s) are determined according to a command type indicated by the control signaling, that is, at least one resource pool and partial resource block(s) supporting transmission of data information are determined based on the control signaling, the terminal device selects at least one resource block from the partial resource block(s) of the at least one resource pool determined based on the control signaling according to an energy storage state of the terminal device, and determines position information of the at least one resource block; or, the position information of at least one resource pool and the resource block identifier(s) of the partial resource block(s) are determined according to the command type indicated by the control signaling, that is, the at least one resource pool and the partial resource block(s) supporting transmission of the data information are determined based on the control signaling, the terminal device selects at least one resource block from the partial resource block(s) of the at least one resource pool determined based on the control signaling according to the energy storage state of the terminal device, and determines the position information of the at least one resource block; or, period(s) of at least one resource block and resource pool identifier(s) of at least one resource pool are determined according to a command type indicated by the control signaling, that is, at least one resource pool is determined based on the control signaling, and at least one resource block is selected from at least one resource pool determined based on the control signaling according to an energy storage state of the terminal device, and resource block identifier(s) of the at least one resource block are determined; or, period(s) of at least one resource block and position information of at least one resource pool are determined according to a command type indicated by the control signaling, that is, at least one resource pool is determined based on the control signaling, the terminal device selects at least one resource block from the at least one resource pool determined based on the control signaling according to an energy storage state of the terminal device, and determines position information of the at least one resource block; or, resource pool identifier(s) of at least one resource pool is determined according to a data type and/or data volume indicated by the control signaling, that is, at least one resource pool is determined based on the control signaling, and the terminal device selects at least one resource block from the at least one resource pool determined based on the control signaling according to the device identifier of the terminal device, and determines resource block identifier(s) of the at least one resource block; or, position information of at least one resource pool is determined according to the data type and/or the data volume indicated by the control signaling, that is, at least one resource pool is determined based on the control signaling, and at least one resource block is selected from the at least one resource pool determined based on the control signaling according to the device identifier of the terminal device, and position information of the at least one resource block is determined; or, resource pool identifier(s) of at least one resource pool and position information of partial resource block(s) are determined according to a data type and/or data volume indicated by the control signaling, that is, at least one resource pool and partial resource block(s) supporting transmission of the data information are determined based on the control signaling, and at least one resource block is selected from the partial resource block(s) of at least one resource pool determined based on the control signaling according to the device identifier of the terminal device, and resource block identifier(s) of the at least one resource block is determined; or, resource pool identifier(s) of at least one resource pool and resource block identifier(s) of partial resource block(s) are determined according to a data type and/or data volume indicated by the control signaling, that is, at least one resource pool and partial resource block(s) supporting transmission of data information are determined based on the control signaling, and the terminal device selects at least one resource block from the partial resource block(s) of at least one resource pool determined based on the control signaling according to the device identifier of the terminal device, and determines resource block identifier(s) of the at least one resource block; or, the position information of at least one resource pool and the position information of partial resource block(s) are determined according to the data type and/or the data volume indicated by the control signaling, that is, the at least one resource pool and partial resource block(s) supporting transmission of the data information are determined based on the control signaling, and the terminal device selects at least one resource block from the partial resource block(s) of the at least one resource pool determined based on the control signaling according to the device identifier of the terminal device to determine the position information of the at least one resource block; or, the position information of at least one resource pool and the resource block identifier(s) of the partial resource block are determined according to the data type and/or the data volume indicated by the control signaling, that is, the at least one resource pool and the partial resource block(s) supporting transmission of the data information are determined based on the control signaling, the terminal device selects at least one resource block from the partial resource block(s) of the at least one resource pool determined based on the control signaling according to the device identifier of the terminal device, and determines the position information of the at least one resource block; or, resource pool identifier(s) of at least one resource pool is determined according to a command type indicated by the control signaling, that is, at least one resource pool is determined based on the control signaling, period(s) of at least one resource block is determined according to an energy storage state of the terminal device, at least one resource block is selected from the at least one resource pool determined based on the control signaling, and resource block identifier(s) of the at least one resource block is determined; or, the position information of the at least one resource pool is determined according to the command type indicated by the control signaling, that is, the at least one resource pool is determined based on the control signaling, the period(s) of the at least one resource block is determined according to the energy storage state of the terminal device, at least one resource block is selected from the at least one resource pool determined based on the control signaling, and the position information of the at least one resource block is determined; or, resource pool identifier(s) of at least one resource pool is determined according to a command type indicated by the control signaling, that is, at least one resource pool is determined based on the control signaling, period(s) of at least one resource block is determined according to an energy storage state of the terminal device, at least one resource block is selected from the at least one resource pool determined based on the control signaling according to the device identifier of the terminal device, and resource block identifier(s) of the at least one resource block is determined; or, the position information of the at least one resource pool is determined according to the command type indicated by the control signaling, that is, the at least one resource pool is determined based on the control signaling, the terminal device determines the period(s) of the at least one resource block according to the energy storage state of the terminal device, and selects at least one resource block from the at least one resource pool determined based on the control signaling according to the device identifier of the terminal device, and determines the position information of the at least one resource block.

In some embodiments, the apparatus further includes the third receiving module and a retransmission module.

The third receiving module is configured to receive a retransmission command sent by the network device, and the retransmission command is used to instruct the terminal device to reperform the transmission of data information.

In some embodiments, the terminal device receives the retransmission command sent by the network device, and the retransmission command indicates resource block(s) used by the terminal device when performing the retransmission; or, the retransmission command indicates at least one resource pool used by the terminal device when performing retransmission; or, the retransmission command instructs the terminal device to reselect at least one resource block in the at least one resource pool to perform transmission of data information.

The retransmission module is configured to perform retransmission of data information according to the resource block(s) indicated by the retransmission command; or, according to the retransmission command, select at least one resource block in the at least one resource pool to perform retransmission of the data information.

In some embodiments, the retransmission command uses the second information to indicate at least one resource pool and/or at least one resource block that the terminal device needs to use. The second information may be time domain position information and/or frequency domain position information, and may be sequence number(s) of resource pool(s) and/or resource block(s).

In a case that the retransmission command indicates resource block(s) used by the terminal device when performing retransmission, the terminal device performs retransmission of data information according to the resource block(s) indicated by the retransmission command. In a case that the retransmission command indicates at least one resource pool used by the terminal device when performing retransmission, the terminal device re-selects at least one resource block in the at least one resource pool to perform transmission of data information. When the retransmission command does not indicate the resource pool(s) and the resource block(s) when the terminal device performs retransmission, the terminal device re-selects at least one resource block in the at least one resource pool to perform retransmission of the data information, and the re-selected at least one resource block in the at least one resource pool is randomly selected by the terminal device.

In summary, the apparatus provided by the embodiment of the present disclosure performs retransmission after the terminal device receives the retransmission command. The retransmission command may indicate at least one resource pool and/or at least one resource block that needs to be used, and the retransmission command may not indicate any retransmission information, and the terminal device may randomly select the resource block(s) to perform retransmission by itself. The method can ensure that the network device successfully receives each piece of data information that needs to be transmitted, thus improving the reliability of transmission of data information.

FIG. 12 illustrates a block diagram of a structure of an apparatus for transmitting data information according to an exemplary embodiment of the present disclosure. The apparatus includes a detection module 610.

The detection module 610 is configured to detect data information transmitted by a terminal device using at least one resource block in at least one resource pool, and the terminal device is a device that operates by harvesting ambient energy.

In some embodiments, the at least one resource pool is pre-configured or pre-agreed. The at least one resource pool is grouped according to at least one of: data type(s) that resource block(s) in the resource pool(s) can carry, resource block size(s), or interval(s) between resource blocks (which may also be referred to as period(s) of the resource blocks).

As illustrated in FIG. 8, the resource pool(s) is grouped according to at least one of data type(s) that the resource block(s) can carry, resource block size(s), or interval(s) between the resource blocks (which may also be referred to as period(s) of the resource block). For example, if the data types that the resource block set 1 to the resource block set 3 can carry are data type A, and the data types that the resource block set 4 and the resource block set 5 can carry are data type B, the resource block set 1 to the resource block set 3 may be grouped into a resource pool, and the resource block set 4 and the resource block set 5 may be grouped into another resource pool. Alternatively, when grouping according to the resource block size, since the resource block sizes of the resource block set 1, the resource block set 4, and the resource block set 5 are the same, the resource block set 1, the resource block set 4, and the resource block set 5 may be grouped into a resource pool, the resource block set 2 may be grouped into a resource pool, and the resource block set 3 may be grouped into a resource pool. When grouping according to the interval between resource blocks, the resource block set 1 to the resource block set 3 having an interval 1 between resource blocks may be grouped into a resource pool, the resource block set 4 having an interval 2 between resource blocks may be grouped into a resource pool, and the resource block set 5 having an interval 3 between resource blocks may be grouped into a resource pool.

In addition, the above-mentioned methods for grouping the resource pool(s) may be implemented in combination, for example, the resource pool(s) is grouped according to the data type(s) that the resource block(s) can carry and the interval(s) between the resource block(s); or the resource pool(s) is grouped according to the resource block size(s) and the interval(s) between the resource blocks; or the resource pool(s) is grouped according to data type(s) that the resource block(s) can carry and resource block size(s); or the resource pool(s) is grouped according to the data type(s) that the resource block(s) can carry, the resource block size(s), and the interval(s) between the resource blocks. For example, the data types that the resource block set 1 to the resource block set 3 are the data type A, and the data type that the resource block set 4 and the resource block set 5 are the data type B. When the resource pools are grouped according to the data types that the resource blocks can carry and the intervals between the resource blocks, the data types are used as the main grouping basis and the intervals between the resource blocks are used as the secondary grouping basis, the resource block set 1 to the resource block set 3 may be grouped into a resource pool, the resource blocks in the resource pool can carry the data type A and the intervals between the resource blocks in the resource pool are less. The resource pool set 4 and the resource block set 5 are grouped into a resource pool, the resource blocks in the resource pool can carry the data type B and the intervals between the resource blocks in the resource pool is greater. Alternatively, when the resource pools are grouped according to the data types that the resource blocks can carry and the intervals between the resource blocks, the intervals between the resource blocks are used as the main grouping basis and the data types are used as the secondary grouping basis, the resource block set 1 to the resource block set 3 may be grouped into a resource pool, the resource block set 4 may be grouped into a resource pool, and the resource block set 5 may be grouped into a resource pool. In FIG. 8, "interval" referring to a portion between the time domain end position of a preceding resource block and the time domain start position of an immediately following resource block is taken as an example, but it is not excluded that "interval" refers to a portion between the time domain start position of a preceding resource block and the time domain start position of an immediately following resource block, or a portion between the time domain end position of a preceding resource block and the time domain end position of an immediately following resource block.

It should be noted that the embodiments of the present disclosure do not limit the measurement unit of the resource block size(s), the measurement unit of the interval(s) between the resource blocks, and the like. For example, the resource block size(s) may be defined according to the time domain resource and/or the frequency domain resource, and the interval(s) between the resource blocks may be defined according to the time domain interval and/or the frequency domain interval. The unit of the resource block size(s) and the unit of the interval between the resource blocks may be a time domain unit such as a symbol, a subframe, a frame, a microsecond, a millisecond, a second, or the like. The unit of the resource block size(s) and the unit of the interval between the resource blocks may be a frequency domain unit such as a subcarrier, a carrier, a Physical Resource Block (PRB), hertz, or the like. The resource block size may be represented by the data volume that the resource block can carry, that is, the unit of the resource block size may be a unit of data volume, such as bit, Byte, KB, MB, or the like.

In some embodiments, the transmission information corresponding to the resource block(s) carrying the data information is determined based on at least one of: a time domain resource when receiving the control signaling, a command type indicated by the control signaling, data type, data volume, an energy storage state of the terminal device, a device identifier of the terminal device, or a resource utilization rate of each of the at least one resource pool. The transmission information is information for determining at least one resource pool and/or at least one resource block.

In some embodiments, the transmission information includes at least one piece of following information: resource pool identifier(s) of the at least one resource pool; position information of at least one resource pool, the position information including at least one of time domain position information or frequency domain position information; resource block identifier(s) of at least one resource block; position information of at least one resource block, the position information including at least one of time domain position information or frequency domain position information; or period(s) of at least one resource block. The time domain position information includes at least one of a time domain start point, a time domain end point, or a time domain length, and the frequency domain position information includes at least one of a frequency domain start point, a frequency domain end point, or a frequency domain length.

In some embodiments, the apparatus further includes the first transmission module.

The first transmission module is configured for the network device to send a resource utilization rate of each of the at least one resource pool to the terminal device. The network device periodically issues a resource utilization rate of each of the at least one resource pool. The resource utilization rate is calculated based on periodically occupied resource(s) in the resource pool, aperiodically occupied resource(s) allocated by the network device, and usable resource(s) in the resource pool. The resource utilization rate is used to indicate the usage case of the resource pool within a certain time domain resource.

In some embodiments, at least one resource pool is configured during a registration process; or, the at least one resource pool is configured in a wake-up signal; or, the at least one resource pool is configured in control signaling.

For example, at least one resource pool belongs to a resource pool pre-generated by a network device, and the network device reserves one or more sets of resource blocks according to a command type, a data type and a data volume to constitute one or more resource pools. In the registration process of the terminal device, the network device configures at least one of the pre-generated one or more resource pools for use by the terminal device; or when the network device needs to wake up the terminal device to transmit data information, at least one of the pre-generated one or more resource pools is configured for use by the terminal device, and the at least one resource pool may be any several resource pools among the pre-generated one or more resource pools, or may be at least one resource pool selected by the network device for the terminal device according to the data type and/or data volume expected to be transmitted by the terminal device and matched with the data type and/or data volume; or, when the network device instructs the terminal device to transmit data information by using the control signaling, at least one of the pre-generated one or more resource pools is configured for use by the terminal device, and the at least one resource pool may be any several resource pools among the pre-generated one or more resource pools, or may be at least one resource pool selected by the network device for the terminal device by using at least one of a command type, a data type, and a data volume indicated by the control signaling and matched with the above information indicated by the control signaling.

In some embodiments, the at least one resource block in the at least one resource pool may be understood as at least one resource block in a set of resource blocks configured by the network device, and may also be understood as at least one resource block configured by the network device. The at least one resource block is located within the at least one resource pool.

In some embodiments, the network device determines whether data information is carried on the resource block(s) by detecting energy (energies) on the resource block(s). For example, the energy of a resource block that does not carry data information is about 100 dB, and the energy of a resource block that carries data information is more than 120 dB.

In summary, in the apparatus provided by the embodiment of the present disclosure, the network device detects data information on each resource block in each resource pool, it can be ensured that the network device successfully receives the data information transmitted by the terminal device, and that the data transmission process can be successfully completed.

In some embodiments, resource block(s) carrying data information are determined in two manners, and these two determination manners have been shown above and will not be described again here.

In the determination manner 1, the data information is transmitted by the terminal device by using at least one resource block in the at least one resource pool based on an instruction of control signaling.

In some embodiments, the apparatus further includes the second transmission module.

The second transmission module is configured to send control signaling to the terminal device, and control signaling is used for instructing the terminal device to perform transmission of data information by using at least one resource pool and/or at least one resource block.

In some embodiments, the information indicated by the control signaling includes at least one of a command type, a type of data that needs to be transmitted, data volume that needs to be transmitted, or a device identifier of the terminal device. The device identifier of the terminal device is a physical identifier or a logical identifier, the physical identifier is an identifier uniquely indicating the terminal device, the logical identifier is an identifier uniquely indicating the terminal device within a range covered by the network device, and the length of the logical identifier is generally shorter than the physical identifier.

Alternatively, there is a correspondence among the command type, the type of data that needs to be transmitted, and the data volume that needs to be transmitted. For example, the state query command corresponds to data type A; or the state query command corresponds to the data type A, and the corresponding data volume is 8 bits; or, the sensor data reporting command corresponds to data volumes of 16 bits, 32 bits and 64 bits; or, the sensor data reporting command corresponds to the data type B; or data type B corresponds to data volumes of 16 bits, 32 bits, and 64 bits.

The detection module 610 is further configured to detect data information on the at least one resource pool and/or the at least one resource block indicated by the control signaling, and the data information is transmitted by the terminal device by using the at least one resource pool and/or the at least one resource block based on the instruction of the control signaling.

In some embodiments, the transmission information corresponding to the resource block(s) carrying the data information is determined based on at least one of: a time domain resource when receiving the control signaling, a command type indicated by the control signaling, a type of data, that needs to be transmitted, indicated by the control signaling, data volume, that needs to be transmitted, indicated by the control signaling, or a device identifier of the terminal device.

In some embodiments, the control signaling is used to instruct the terminal device to perform transmission of data information by using at least one resource pool, and the network device detects the data information on each resource block in the at least one resource pool indicated by the control signaling. Alternatively, the network device configures at least one resource pool for the terminal device by using the control signaling, and detects data information on each resource block in the at least one resource pool indicated by the control signaling.

In some embodiments, the control signaling is used to instruct the terminal device to perform transmission of data information by using at least one resource block in the at least one resource pool, and the detection module 610 is further configured to detect data information on at least one resource block in the at least one resource pool indicated by the control signaling. Alternatively, the control signaling is used to instruct the terminal device to perform transmission of data information by using at least one resource pool, and the detection module 610 is further configured to detect the data information on each resource block in the at least one resource pool indicated by the control signaling. Alternatively, the control signaling is used to instruct the terminal device to perform transmission of data information by using at least one resource block, and the detection module 610 is further configured to detect data information on at least one resource block in the first target resource pool indicated by the control signaling. The first target resource pool is a resource pool including at least one resource block.

In summary, in the apparatus provided by the embodiment of the present disclosure, the network device directly indicates the resource block(s) that needs to be used for data transmission for the terminal device, and the network device is responsible for regulating the use of the resource block(s), which can greatly reduce the probability of data collision. Moreover, the network device can also store which resource block(s) will be used for data transmission, and can directly detect data information from the resource block(s), thus improving the data receiving efficiency of the network device.

In the determination manner 2, the data information is transmitted by the at least one resource block in at least one resource pool selected by the terminal device.

In some embodiments, when the at least one resource pool and the at least one resource block are both selected by the terminal device, the at least one resource pool and the at least one resource block are both unknown to the network device, and the detection module 610 is further configured for the network device to detect data information on each resource block in each resource pool.

In some embodiments, the data information is transmitted by the terminal device selecting at least one resource block in the at least one resource pool in a case that a wake-up signal or control signaling is received or a trigger event is present. In a case that the at least one resource pool used by the terminal device is at least one resource pool known to the network device and the at least one resource block used by the terminal device is resource block(s) unknown to the network device, the detection module 610 is further configured to detect data information on each resource block in the at least one resource pool known to the network device; and/or, in a case that the at least one resource block used by the terminal device is the at least one resource block known to the network device, the detection module 610 is further configured to detect data information on the at least one resource block known to the network device in the second target resource pool, and the second target resource pool is a resource pool including the at least one resource block known to the network device.

It should be noted that "known" means that the network device knows the selection information of the terminal device for at least one resource pool and/or at least one resource block, and "unknown" means that the network device does not know the selection information of the terminal device for the at least one resource pool and/or the at least one resource block..

In some embodiments, the apparatus further includes the third transmission module.

The third transmission module is configured to send a wake-up signal or control signaling to the terminal device, and the wake-up signal is used to instruct the terminal device to select at least one resource pool and/or at least one resource block to perform transmission of data information. Alternatively, the wake-up signal includes control signaling.

In some embodiments, the transmission information corresponding to the resource block(s) carrying the data information is determined based on at least one of the following: a resource utilization rate of each of the at least one resource pool, a command type indicated by control signaling, a data type, a data volume, an energy storage state of the terminal device, or a device identifier of the terminal device. The data type and the data volume are information indicated by the control signaling; or, the data type and the data volume are acquired by the terminal device according to the data information that needs to be transmitted. The device identifier of the terminal device is information indicated by the control signaling; or information stored by the terminal device itself.

In some embodiments, the network device sends a resource utilization rate of each of the at least one resource pool to the terminal device. The network device periodically issues a resource utilization rate of each of the at least one resource pool. The resource utilization rate is calculated based on periodically occupied resource(s) in the resource pool, aperiodically occupied resource(s) allocated by the network device, and usable resource(s) in the resource pool. The resource utilization rate is used to indicate the usage case of the resource pool within a certain time domain resource.

In some embodiments, the at least one resource pool and/or the at least one resource block carrying the data information is determined by the terminal device based on the first information, and the first information is calculated according to the device identifier of the terminal device. Alternatively, the first information may be time domain position information and/or frequency domain position information, or the first information may be sequence number(s) of resource pool(s) and/or resource block(s).

In some embodiments, the first information is obtained by mapping based on all bits or a part of bits of a binary sequence. The binary sequence is obtained by calculating based on the device identifier of the terminal device.

In summary, the apparatus provided by the embodiment of the present disclosure can effectively reduce the data interaction between the terminal device and the network device in the data transmission process by selecting at least one resource block in at least one resource pool by the terminal device, thereby saving the energy consumption of the terminal device and improving the resource utilization rate. When the terminal device makes the selection, the resource block(s) can be selected by the resource utilization rate of each of the at least one resource pool, the first information calculated based on the device identifier of the terminal device, and the like, and the probability of data collision can be reduced when multiple terminal devices have data transmission requirements at the same time. In addition, the instruction of the network device and the selection of the terminal device can be combined, thereby improving the selection efficiency of the terminal device and improving the data transmission efficiency. Because the network device can be regulated as a whole, the probability of data collision can also be reduced to a certain extent.

In some embodiments, the apparatus further includes a monitoring module and the fourth transmission module.

The monitoring module is configured to monitor a reception situation of data information.

In some embodiments, the network device determines the caring situation of data information on the resource block(s) according to the energy on each resource block. For example, the energy of a resource block that does not carry data information is about 100 dB, and the energy of a resource block that carries data information is more than 120 dB. If the network device can obtain data information from the resource block with energy greater than 120dB, it is represented that the data information is correctly received. If the network device cannot obtain data information from a resource block with energy greater than 120 dB, it is represented that the data information cannot be correctly received, and a data collision may occur, that is, at least two terminal devices perform transmission of data information using the same resource block.

The fourth transmission module is configured to, when a data collision occurs in the resource block, send a retransmission command to the first terminal devices, and the retransmission command is used to instruct the first terminal devices to reperform the transmission of data information .

In some embodiments, the first terminal devices are at least two terminal devices in which a data collision occurs, that is, the network device can identify which terminal devices have a data collision in the resource block; or, the first terminal devices are terminal device predicted by the network device to use the resource pool in which the resource block is located, that is, the network device can speculate which terminal devices will have data collision in the resource block based on configuration information stored in the network device, control signaling or wake-up signal sent by the network device, and the like; or, the first terminal devices are all the terminal devices that use the resource pool in which the resource block is located, that is, all the terminal devices configured with the resource pool are retransmitted.

In some embodiments, the retransmission command is used to instruct each of the first terminal devices to perform transmission of data information using at least one resource pool and/or at least one resource block; or, the retransmission command is used to instruct each of the first terminal devices to reselect at least one resource pool and/or at least one resource block to perform transmission of data information.

In summary, the apparatus provided by the embodiment of the present disclosure shows a judgment of a data collision by the network device and a processing method after a data collision occurs, and the method can ensure that the network device successfully receives respective pieces of data information that need to be transmitted, thereby improving the reliability of data transmission.

It should be noted that the apparatus provided in the above-described embodiments is illustrated only by the division of the above-described functional modules, and in practical application, the above-described function allocation may be completed by different functional modules as necessary, that is, the internal structure of the apparatus may be divided into different functional modules to complete all or part of the above-described functions.

Regarding the apparatus in the present embodiment, the specific manner in which each module performs an operation has been described in detail in the embodiment relating to the method, and will not be described in detail here.

FIG. 13 illustrates a schematic structural diagram of a wireless communication device (AP or STA) according to an exemplary embodiment of the present disclosure. The wireless communication device 700 includes a processor 701, a receiver 702, a transmitter 703, a memory 704, and a bus 705.

The processor 701 includes one or more processing cores, and the processor 801 executes various functional applications and information processing by running software programs and modules.

The receiver 702 and the transmitter 703 may be implemented as a transceiver 706, which may be a communication chip.

The memory 704 is connected to the processor 701 via a bus 705. The memory 704 may be configured to store a computer program, and the processor 701 is configured to execute the computer program to implement various operations performed by the Ambient IoT device or the terminal device or the network device in the above-described method embodiment. The transceiver 706 may include a transmitter and a receiver. The transmitter is configured to implement the operations or functions related to transmission in the above-described method, the receiver is configured to implement the operations or functions related to reception in the above-described method, and the processor 701 is configured to implement the remaining operations or functions other than transmission and reception.

Further, the Memory 704 may be implemented by any type of volatile or nonvolatile storage device, including, but not limited to, Random-Access Memory (RAM) and Read-Only Memory (ROM), Erasable Programmable Read-Only Memory (EPROM), Electrically Erasable Programmable Read-Only Memory (EEPROM), flash Memory or other solid-state storage technology, Compact Disc Read-Only Memory (CD-ROM), Digital Video Disc (DVD) or other optical storage, tape cassette, magnetic tape, magnetic disk storage or other magnetic storage device, or a combination thereof.

The embodiments of the present disclosure further provide a computer-readable storage medium, a computer program is stored in the storage medium, and the computer program is used for being executed by a processor of an Ambient IoT device, a terminal device or a network device, so as to implement various operations in the method for transmitting the data information.

In some embodiments, the computer-readable storage medium may include a ROM, a RAM, a SSD (Solid State Drive), an optical disk, or the like. The Random Access Memory may include a Resistance Random Access Memory (ReRAM) and a Dynamic Random Access Memory (DRAM).

The embodiments of the present disclosure further provide a chip. The chip includes a programmable logic circuit and/or a program instruction, and is used for realizing the method for transmitting the data information when the chip is run on a terminal or a network device.

The embodiments of the present disclosure further provide a computer program product or a computer program, the computer program product or the computer program includes a computer instruction, the computer instruction is stored in a computer-readable storage medium, and a processor of a terminal or a network device reads and executes the computer instruction from the computer-readable storage medium to implement the method for transmitting the data information.

Those skilled in the art will recognize that in one or more of the examples described above, the functions described in the embodiments of the present disclosure may be implemented in hardware, software, firmware, or any combination thereof. When implemented using software, these functions may be stored in a computer readable medium or transmitted as one or more instructions or code on a computer readable medium. The computer-readable medium includes a computer storage medium and a communication medium. The communication medium includes any medium that facilitates the transfer of a computer program from one place to another. The storage medium may be any available medium accessible by a general-purpose or special-purpose computer.

It should be understood that the frame format and the element format shown in the embodiments of the present disclosure are exemplary cases, and under different embodiments or different designs, it is not excluded that at least one design of the position of each field in the frame/element, the arrangement order with other fields, the number of occupied bytes, and the number of occupied bits changes, and the specific format of each frame and each element is not limited in the present disclosure.

The above are only optional embodiments of the present disclosure, and are not intended to limit the present disclosure. Any modification, equivalent substitution, improvement, etc. made within the spirit and principles of the present disclosure shall be included in the scope of protection of the present disclosure.

## Claims

1. A method for transmitting data information, wherein the method is performed by a terminal device, the terminal device is a device that operates by harvesting ambient energy, and the method comprises:
performing transmission of the data information by using at least one resource block in at least one resource pool.

2. The method of claim 1, wherein transmission information used for determining the at least one resource pool and/or the at least one resource block is determined based on at least one of following:
a time domain resource when receiving control signaling; a command type indicated by the control signaling; a data type; data volume; an energy storage state of the terminal device; a device identifier of the terminal device; or a resource utilization rate of each of the at least one resource pool.

3. The method of claim 2, wherein the transmission information comprises at least one piece of following information:
resource pool identifier(s) of the at least one resource pool; position information of the at least one resource pool, the position information comprising at least one of time domain position information or frequency domain position information; resource block identifier(s) of the at least one resource block; position information of the at least one resource block, the position information comprising at least one of time domain position information or frequency domain position information; or period(s) of the at least one resource block;
wherein the time domain position information comprises at least one of: time domain start point(s), time domain end point(s), or time domain length(s), and the frequency domain position information comprises at least one of: frequency domain start point(s), frequency domain end point(s), or frequency domain length(s).

4. The method of any one of claims 1 to 3, further comprising:
receiving control signaling, wherein the control signaling is used for instructing the terminal device to perform the transmission of the data information by using at least one of the at least one resource block,
wherein performing the transmission of the data information by using the at least one resource block in the at least one resource pool comprises:
performing, based on an instruction of the control signaling, the transmission of data information by using the at least one resource block in the at least one resource pool.

5. The method of claim 4, wherein the transmission information is determined based on at least one of following:
a time domain resource when receiving the control signaling; a command type indicated by the control signaling; a data type, that needs to be transmitted, indicated by the control signaling; data volume, that needs to be transmitted, indicated by the control signaling; or a device identifier of the terminal device.

6. The method of any one of claims 1 to 3, wherein performing the transmission of data information by using the at least one resource block in the at least one resource pool comprises:
selecting at least one resource block in the at least one resource pool to perform the transmission of data information.

7. The method of claim 6, wherein selecting the at least one resource block in the at least one resource pool to perform the transmission of data information comprises:
in a case that a wake-up signal or control signaling is received or a trigger event exists, selecting the at least one resource block in the at least one resource pool to perform the transmission of data information.

8. The method of claim 7, wherein the transmission information is determined based on at least one of following:
a resource utilization rate of each of the at least one resource pool; a command type indicated by the control signaling; a data type; data volume; an energy storage state of the terminal device; or a device identifier of the terminal device.

9. The method of claim 8, wherein the at least one resource pool and/or the at least one resource block is determined based on first information, and the first information is obtained by calculating based on the device identifier of the terminal device.

10. The method of claim 9, wherein the first information is time domain position information and/or frequency domain position information.

11. The method of claim 9, wherein the first information is sequence number(s) of resource block(s).

12. The method of any one of claims 9 to 11, wherein the first information is obtained by mapping based on all bits or a part of bits of a binary sequence, and the binary sequence is obtained by calculating based on the device identifier of the terminal device.

13. The method of claim 3 or 8, further comprising:
receiving the resource utilization rate, of each of the at least one resource pool, sent by a network device.

14. The method of any one of claims 1 to 13, further comprising:
receiving a retransmission command sent by a network device, wherein the retransmission command is used to instruct the terminal device to reperform the transmission of data information;
performing retransmission of the data information according to a resource block indicated by the retransmission command; or selecting, according to the retransmission command, at least one resource block in the at least one resource pool to perform the retransmission of the data information.

15. The method of any one of claims 1 to 14, wherein
the at least one resource pool is configured during a registration process; or, the at least one resource pool is configured in a wake-up signal; or the at least one resource pool is configured in control signaling.

16. A method of transmitting data information, wherein the method is performed by a network device, and the method comprises:
detecting data information, the data information being transmitted by a terminal device by using at least one resource block in at least one resource pool, and the terminal device being a device that operates by harvesting ambient energy.

17. The method of claim 16, wherein transmission information used for determining the at least one resource pool and/or the at least one resource block is determined based on at least one of following:
a time domain resource when receiving control signaling; a command type indicated by the control signaling; a data type; data volume; an energy storage state of the terminal device; a device identifier of the terminal device; or a resource utilization rate of each of the at least one resource pool.

18. The method of claim 17, wherein the transmission information comprises at least one piece of following information:
resource pool identifier(s) of the at least one resource pool; position information of the at least one resource pool, the position information comprising at least one of time domain position information or frequency domain position information; resource block identifier(s) of the at least one resource block; position information of the at least one resource block, the position information comprising at least one of time domain position information or frequency domain position information; or period(s) of the at least one resource block;
wherein the time domain position information comprises at least one of: time domain start point(s), time domain end point(s), or time domain length(s), and the frequency domain position information comprises at least one of: frequency domain start point(s), frequency domain end point(s), or frequency domain length(s).

19. The method of any one of claims 16 to 18, further comprising:
sending control signaling to the terminal device, wherein the control signaling is used for instructing the terminal device to perform the transmission of data information by using at least one resource pool and/or at least one resource block,
wherein detecting the data information, the data information being transmitted by the terminal device by using the at least one resource block in the at least one resource pool comprises:
detecting the data information on the at least one resource pool and/or the at least one resource block indicated by the control signaling, the data information being transmitted by the terminal device by using the at least one resource pool and/or the at least one resource block based on an instruction of the control signaling.

20. The method of claim 19, wherein the detecting data information on the at least one resource pool and/or the at least one resource block indicated by the control signaling comprises:
detecting the data information on at least one resource block in the at least one resource pool indicated by the control signaling; or detecting the data information on each resource block in the at least one resource pool indicated by the control signaling; or detecting the data information on at least one resource block in a first target resource pool indicated by the control signaling, wherein the first target resource pool is a resource pool comprising the at least one resource block.

21. The method of claim 19 or 20, wherein the transmission information is determined based on at least one of following:
a time domain resource when receiving the control signaling; a command type indicated by the control signaling; a data type, that needs to be transmitted, indicated by the control signaling; data volume, that needs to be transmitted, indicated by the control signaling; or a device identifier of the terminal device.

22. The method of any one of claims 16 to 18, wherein detecting the data information comprises:
detecting the data information on each resource block of each resource pool.

23. The method of claim 22, wherein the data information is transmitted by the terminal device by selecting at least one resource block in the at least one resource pool in a case that a wake-up signal or control signaling is received or a trigger event exists, the at least one resource pool used by the terminal device is at least one resource pool known to the network device, and/or the at least one resource block used by the terminal device is at least one resource block known to the network device,
wherein detecting the data information comprises:
detecting the data information on each resource block in the at least one resource pool known to the network device; or detecting the data information on the at least one resource block, known to the network device, in a second target resource pool, wherein the second target resource pool is a resource pool comprising the at least one resource block known to the network device.

24. The method of claim 23, wherein the transmission information is determined based on at least one of following:
a resource utilization rate of each of the at least one resource pool; a command type indicated by the control signaling; a data type; data volume; an energy storage state of the terminal device; or a device identifier of the terminal device.

25. The method of claim 24, wherein the at least one resource pool and/or the at least one resource block carrying the data information is determined by the terminal device based on first information, and the first information is obtained by calculating based on the device identifier of the terminal device.

26. The method of claim 25, wherein the first information is time domain position information and/or frequency domain position information.

27. The method of claim 25, wherein the first information is sequence number(s) of resource block(s).

28. The method of any one of claims 25 to 27, wherein the first information is obtained by mapping based on all bits or a part of bits of a binary sequence, and the binary sequence is obtained by calculating based on the device identifier of the terminal device.

29. The method of any one of claims 23 to 28, further comprising:
sending a wake-up signal or control signaling to the terminal device, wherein the wake-up signal is used to instruct the terminal device to select at least one resource pool and/or at least one resource block to perform the transmission of data information.

30. The method of claim 18 or 24, further comprising:
sending, to the terminal device, the resource utilization rate of each of the at least one resource pool.

31. The method of any one of claims 16 to 30, further comprising:
monitoring a reception situation of the data information; and
in a case that a data collision occurs in resource block(s), sending a retransmission command to first terminal devices, wherein the retransmission command is used to instruct the first terminal devices to reperform the transmission of data information.

32. The method of claim 31, wherein the first terminal devices are at least two terminal devices for which the data collision occurs; or,
the first terminal devices are terminal device, predicted by the network device to use a resource pool in which the resource block(s) is located; or the first terminal devices are all terminal devices that use the resource pool in which the resource block(s) is located.

33. The method of claim 31, wherein
the retransmission command is used to instruct each of the first terminal devices to perform the transmission of data information by using the at least one resource pool and/or the at least one resource block; or the retransmission command is used to instruct each of the first terminal devices to reselect at least one resource pool and/or at least one resource block to perform the transmission of data information.

34. The method of any one of claims 16 to 33, wherein
the resource pool(s) is/are configured during a registration process; or the resource pool(s) is/are configured in a wake-up signal; or the resource pool(s) is configured in control signaling.

35. An apparatus for transmitting data information, wherein the apparatus is an apparatus that operates by harvesting ambient energy, and the apparatus comprises:
a transmission module, configured to perform transmission of data information by using at least one resource block in at least one resource pool.

36. An apparatus for transmitting data information, comprising:
a detection module, configured to detect data information, the data information being transmitted by a terminal device by using at least one resource block in at least one resource pool, and the terminal device being a device that operates by harvesting ambient energy.

37. A terminal device, operating by harvesting ambient energy, comprising a processor and a memory, wherein at least one program is in the memory, and the terminal device is configured to perform the at least one program in the memory to implement the method for transmitting data information of any one of claims 1 to 15.

38. A network device, comprising a processor and a memory, wherein at least one program is in the memory, and the network device is configured to perform the at least one program in the memory to implement the method for transmitting data information of any one of claims 16 to 34.

39. A computer-readable storage medium, wherein a computer program is stored in the computer-readable storage medium for being executed by a processor to implementing the method for transmitting data information of any one of claims 1 to 34.

40. A chip comprising programmable logic circuitry and/or program instructions for implementing, when the chip is in operation, the method for transmitting data information of any one of claims 1 to 34.

41. A computer program product or computer program comprising computer instructions stored in a computer-readable storage medium from which a processor reads and executes the computer instructions to implement the method for transmitting data information of any one of claims 1 to 34.
